(19) Europäisches Patentamt

European Patent Office

Office européen des brevets

(11) EP 1 544 446 B1

(12) EUROPEAN PATENT SPECIFICATION

(45) Date of publication and mention
of the grant of the patent:
**14.12.2011 Bulletin 2011/50**

(51) Int Cl.:
*F02D 41/38* *(2006.01)*     *F02D 41/40* *(2006.01)*

(21) Application number: **04029864.8**

(22) Date of filing: **16.12.2004**

(54) **Fuel injection device**

Kraftstoffeinspritzvorrichtung

Dispositif d'injection de carburant

(84) Designated Contracting States:
**DE FR IT**

(30) Priority: **19.12.2003 JP 2003423391**

(43) Date of publication of application:
**22.06.2005 Bulletin 2005/25**

(73) Proprietor: **DENSO CORPORATION**
**Kariya-city,**
**Aichi-pref. 448-8661 (JP)**

(72) Inventors:
• **Ishizuka, Koji**
**Denso Corporation**
**Kariya-city**
**Aichi-pref., 448-8661 (JP)**

• **Fukushima, Takayuki**
**Denso Corporation**
**Kariya-city**
**Aichi-pref., 448-8661 (JP)**
• **Urushibara, Hidehiro**
**Denso Corporation**
**Kariya-city**
**Aichi-pref., 448-8661 (JP)**
• **Nakata, Kenichiro**
**Denso Corporation**
**Kariya-city**
**Aichi-pref., 448-8661 (JP)**

(74) Representative: **TBK**
**Bavariaring 4-6**
**80336 München (DE)**

(56) References cited:
**DE-A1- 4 308 811     US-A- 5 515 830**
**US-A1- 2003 183 204**

**Description**

This invention relates to a fuel injection device for injecting fuel into an internal combustion engine and, more particularly, to a method of determining an injection start delay time between when a control unit generates a valve-opening signal for opening an injector and when the injector actually injects fuel.

In performing a multi-step injection, wherein fuel is injected multiple times per cycle, the injections in the second and subsequent steps involve changes in their injection start delay times. The injection start delay times are affected by the preceding injections (effect of pulsation that generates in a pipe for feeding the fuel into the injector).

Concretely speaking, when an injection pulse signal is provided to an injector, the rate of injection rises from a moment when a predetermined injection start delay time Tds has lapsed after the generation of the injection pulse provided there is no effect of pulsation.

However, if the fuel feed pressure Pc fed to the injector increases due to the pulsation, the injection start delay time Tds decreases and the fuel injection timing advances. Conversely, if the fuel feed pressure Pc decreases due to the pulsation, the injection start delay time Tds increases and the fuel injection timing delays.

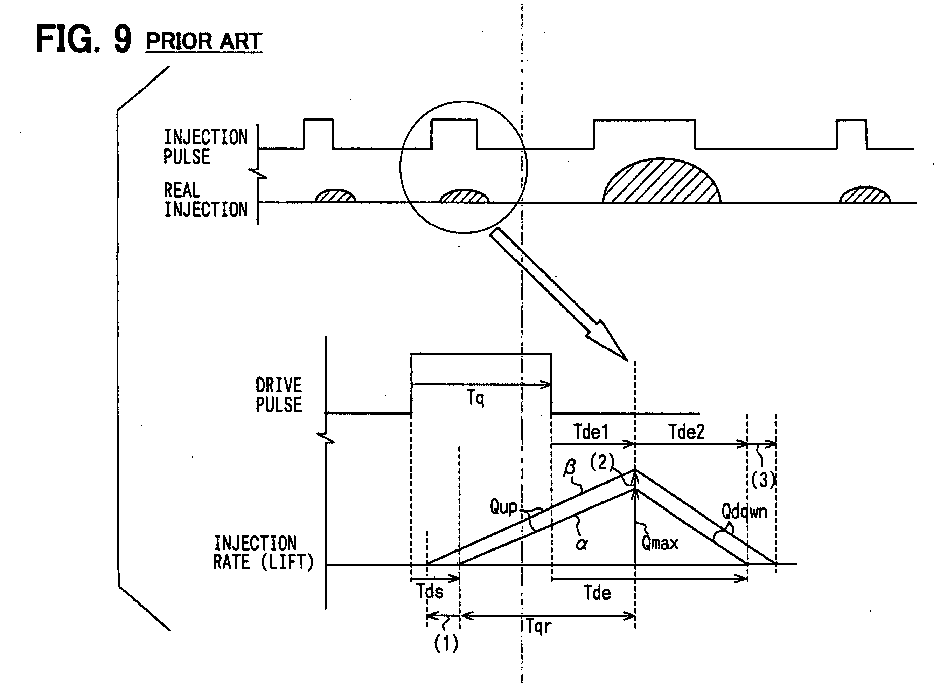

Described below with reference to Fig. 9 is a relationship between a change in the injection start delay time Tds and the injection amount Q' actually injected from the injector.

When there is no effect of pulsation, the rate of injection increases from a moment (required injection start timing) when a predetermined injection start delay time Tds has elapsed after the generation of the injection pulse, and the rate of injection decreases from a moment when a valve-closing pressure arriving time Tdel has elapsed after the injection pulse is stopped. In Fig. 9, therefore, the injection rates is represented by a reference triangle $\alpha$, and the actual injection amount Q' becomes the required injection amount Q, which is dependent on the area of the reference triangle $\alpha$.

However, when the injection start delay time Tds is shortened due to the pulsation and the injection start timing advances, as indicated by arrow (1) in Fig. 9, a maximum injection rate increases, as indicated by an arrow (2), and the needle drop time Tde2 is lengthened, as indicated by an arrow (3). As a result, the injection rates becomes represented by a triangle $\beta$ that is larger than triangle $\alpha$ in Fig. 9 and the actual injection amount Q' becomes dependent on the area of the larger triangle $\beta$, which is greater than the required injection amount Q.

Conversely, when the injection start delay time Tds is lengthened due to the pulsation and the injection start timing delays, the injection rates are represented by a triangle that is smaller than the reference triangle $\alpha$ and the real injection amount Q' becomes smaller than the required injection amount Q.

Furthermore, when the fuel pressure fed to the injector varies due to the pulsation and the injection start delay time Tds varies, the actual injection timing deviates back and forth with respect to the injection start timing requested by the control unit.

In conventional systems, a two-dimensional map (correction map) corresponding to the fuel feed pressure Pc that varies due to the pulsation is provided for each injection of the multiplicity of injections and the output timing of the injection pulse is corrected for each injection to prevent the real injection amount Q' from being varied by the pulsation. One example of such a map is disclosed in Japanese Patent document JP-A-10-266888.

According to the conventional system, however, the two-dimensional map for correcting the injection start delay time Tds is provided for each injection of the multiplicity of injections. When the number of injections increases, therefore, an increased amount of data must be brought into conformity.

Furthermore, even when a portion of the specifications of the injector are changed, it becomes necessary to reconsider all conformance data. This requires a tremendous amount of conformance processing to be executed, which greatly deteriorates the efficiency of the conformance processing.

Therefore, the present invention was accomplished in view of the above circumstances and one of its objects is to provide a fuel injection device that makes it easy to execute the conformance processing to meet the specifications of the injector. This is achieved by transforming the structure of the injector into a simple model, estimating the times required for operating various portions of the injector in the form of the model, calculating the injection start delay time Tds for each injection of the multiplicity of injections, and decreasing the amount of data in the control unit.

According to the present invention, a fuel injection device as set out in claim 1 and alternatively a fuel injection device as set out in claim 17 are provided. Moreover, a method of controlling a fuel injection device as set out in claim 18 is provided.

In detail, one aspect of the present invention divides the injection start delay time Tds into a first period Tds1 defined from when an electric current starts flowing into the electric valve until the electric valve starts moving for being opened, a second period Tds2 defined from when the valve starts moving to when the valve arrives at the fully opened position, and a third period Tds3 defined from when the valve has arrived at the fully opened position to when a pressure Pcc in the control chamber decreases to a valve-opening pressure Popn. The first, second and third periods Tds1, Tds2 and Tds3 are calculated according to simple formulas and the injection start delay time Tds is determined by summing the first, second and third periods Tds1, Tds2 and Tds3.

Therefore, responses in the portions of the first, second and third periods Tds1, Tds2 and Tds3 are simulated by simple formulas and the required response times of these portions are separately calculated. Thus, the injection start delay time Tds can be calculated without requiring tremendous amounts of conformance data unlike the prior art. This makes it possible to decrease the amount of data in the control unit. Even when the specifications of the injector are partially changed, the processing can be executed by changing the conformance values in the changed portions. Namely, the conformance processing can be easily executed even when the specifications of the injector are changed.

Another aspect of the present invention executes a calculation for estimating the pressure Pcc in the control chamber from the fuel feed pressure Pc and specification values of the injector and determines the injection start delay time Tds by using the estimated pressure Pcc in the control chamber.

Therefore, the injection start delay time Tds can be calculated with only using the sensor(e.g., common rail pressure sensor) that detects the fuel feed pressure Pc. Furthermore, the number of steps for conformance can be decreased when the specifications of the injector are changed.

Another aspect of the present invention determines the first period Tds1 from a formula. The formula is based on an estimated pressure Pcc in the control chamber, a diameter of the drain passage, and a voltage value applied to the electric valve.

Therefore, each parameter can be reflected in the first period Tds1 to improve precision for calculating the injection start delay time Tds. Furthermore, the number of steps for conformance can be decreased when the specifications of the injector are changed.

Another aspect of the present invention uses the first period Tds1 as a constant dependent upon the specifications of the injector.

The first period Tds1 is chiefly an electric delay from when an injector signal is generated until a current is fed to the electric valve and the valve in the electric valve starts opening. This is constant in the same injector specifications irrespective of the fuel feed pressure Pc and can be regarded to be a constant.

By using the first period Tds1 as a constant, the amount of data in the control unit may be decreased and the load of the calculation may be increased. Furthermore, the number of steps for conformance is decreased when the specifications of the injector are changed.

Another aspect of the present invention determines the second period Tds2 as a value proportional to an inverse number of a square root of the estimated pressure Pcc in the control chamber.

It can be estimated that the time (second period Tds2) from when the valve in the electric valve starts moving until when it is fully opened shortens with an increase in the pressure Pcc in the control chamber.

Therefore, the second period Tds2 can be determined as a value proportional to an inverse number of a square root of the pressure Pcc in the control chamber.

Therefore, the pressure Pcc in the control chamber can be properly reflected in the second period Tds2 to improve precision for calculating the injection start delay time Tds. Furthermore, the number of steps for conformance can be decreased when the specifications of the injector are changed.

Another aspect of the present invention determines the second period Tds2 as a value proportional to an inverse number of a square root of the fuel feed pressure Pc (e.g., common rail pressure).

It can be estimated that the time (second period Tds2) from when the valve in the electric valve starts moving until when it is fully opened shortens with an increase in the fuel feed pressure Pc.

Therefore, the second period Tds2 can be determined as a value proportional to an inverse number of a square root of the fuel feed pressure Pc.

Therefore, the fuel feed pressure Pc can be properly reflected in the second period Tds2 to improve precision for calculating the injection start delay time Tds. Furthermore, the number of steps for conformance can be decreased when the specifications of the injector are changed.

The third period Tds3 is a time from when the valve in the electric valve has arrived at the fully opened position until when the injector starts injecting. Here, the amount of change Pccdot in the pressure Pcc in the control chamber with the passage of time is expressed by:

$$(1) \quad Pccdot = (Ke/Vcc) \times (Qdin - Qdout),$$

wherein Ke is a bulk modulus obtained through experiment, Vcc is a volume of the control chamber, Qdin is a flow rate of fuel flowing into the control chamber from the flow-in passage (amount flowing into the control chamber), and Qdout is a flow rate of fuel flowing out from the control chamber through the drain passage (amount flowing out of the control chamber).

The amount Qdin flowing into the control chamber and the amount Qdout flowing out from the control chamber can be determined from the following formulas:

$$(2) \qquad Qdin = Qdin0 \times \sqrt{Pc - Pcc};$$

and

$$(3) \qquad Qdout = Qdout0 \times \sqrt{Pcc - Pm},$$

wherein Qdin0 is the amount flowing into the control chamber when the valve of the electromagnetic valve has arrived at the fully opened position, and Qdout0 is the amount flowing out from the control chamber when the valve of the electromagnetic valve has arrived at the fully opened position.

Formulas (2) and (3) are substituted for the above formula (1) and the amount of change Pccdot with the passage of time is integrated from the fuel feed pressure Pc up to the valve-opening pressure Popn to determine the third period Tds3.

However, the load of the above calculation is very large and cannot be executed by the control unit that is traditionally mounted on a vehicle from the standpoint of software processing.

Therefore, a fuel injection device which employs the above-described features determines the third period Tds3 from an interior division formula using an initial pressure change rate dPint of the pressure Pcc in the control chamber when the valve has arrived at the fully opened position and a valve-opening pressure change rate dPopn of the pressure Pcc in the control chamber when the pressure Pcc in the control chamber has reached the valve-opening pressure.

Thus, the third period Tds3 is determined without executing the integration processing in real time, and the load of processing in the third period Tds3 can be greatly decreased. This makes it possible to easily determine the third period Tds3 using the control unit of a level that is traditionally mounted on a vehicle.

Another aspect of the present invention determines a balancing pressure Pinf at which a flow rate Qdin of the fuel flowing into the control chamber from the flow-in passage is balanced with a flow rate Qdout of the fuel flowing out from the control chamber through the drain passage. The a normalized pressure Pstd is determined from the balancing pressure Pinf and the fuel feed pressure Pc. Then, an interior division ratio Kip is determined corresponding to the normalized pressure Pstd. Lastly, the interior division ratio Kip is substituted for the interior division formula of the shortest arriving time Topn0 due to the initial pressure change rate dPint and of the longest arriving time Topn1 due to the valve-opening pressure change rate dPopn to determine the third period Tds3.

The above calculation makes it possible to determine the third period Tds3 while reducing the amount of data in the control unit and decreasing the load of calculation in the control unit.

Another aspect of the present invention uses the interior division ratio Kip as an approximated formula of a second degree or higher degree polynomial in determining the interior division ratio Kip corresponding to the normalized pressure Pstd.

Since the interior division ratio Kip is approximated by a polynomial, the precision can be enhanced for approximating the interior division ratio Kip. Furthermore, since the interior division ratio Kip is determined by the approximation of the polynomial, the amount of data can be reduced in the control unit as compared to when the interior division ratio Kip is held by map data.

Another aspect of the present invention defines the pressure Pcc in the control chamber when the valve has arrived at the fully opened position as a value obtained by multiplying the fuel feed pressure Pc by a coefficient which is determined by taking the pulsation into consideration.

By taking a drop in the pressure Pcc in the control chamber into consideration at a moment when the valve has arrived at the fully opened position, it is allowed to improve the precision for calculating the third period Tds3.

Another aspect of the present invention calculates the valve-opening pressure Popn by using a static force balancing condition between a nozzle-pushing force for pushing a command piston and a needle toward the fuel injection port side and a nozzle reaction for pushing the command piston and the needle back to the control chamber side.

Therefore, the third period Tds3 can be determined through a greatly simplified calculation neglecting the dynamic effect of the injector.

Another aspect of the present invention uses the sliding frictional force of the command piston and of the needle as an offset value in determining the nozzle reaction.

Thus, the third period Td3 is calculated maintaining an improved precision by taking into consideration the sliding frictional force of the command piston and of the needle.

Another aspect of the present invention calculates the nozzle reaction by dividing it into an over-the-seat reaction, by which the needle is pushed back toward the valve opening side upon receiving the fuel feed pressure Pc, and an under-the-seat reaction, which is received from an external unit through the injection port on the side closer to

# EP 1 544 446 B1

the injection port than to the seat of the needle.

By being divided into the over-the-seat reaction and the under-the-seat reaction, the nozzle reaction can be calculated in a simplified manner.

Another aspect of the present invention uses the fuel feed pressure Pc by taking the pulsation into consideration in determining the over-the-seat reaction.

By taking the pulsation generating in the fuel feed pressure Pc into consideration, as described above, it is allowed to improve the precision for estimating the over-the-seat reaction during the multiplicity of injection and, hence, to improve the precision for calculating the third period Tds3.

Another aspect of the present invention estimates a pressure Pcyl in the cylinder in which the injector is installed for injecting the fuel in determining the under-the-seat reaction, and uses the estimated pressure Pcyl in the cylinder.

By determining the under-the-seat reaction by using the pressure Pcyl in the cylinder, it is allowed to automatically compensate the effect of the pressure Pcyl in the cylinder upon the needle and, hence, to decrease the number of steps for conformance when the device is mounted on the engine.

Another aspect of the present invention is defined by a moment at which the valve has arrived at the fully opened position in the injection of this time is within a predetermined period of time of from when the valve has arrived at the closed position in the injection of the last time, a command piston extension/contraction correction is effected to shorten the third period Tds3 as the time becomes close to the moment at which the valve has arrived at the closed position in the injection of the last time.

This eliminates variation in the third period Tds3 caused by the extension and contraction of the command piston (member which transmits the pressure in the control chamber to the needle)(the command piston once extends when the pressure in the control chamber drops in the injection of the last time, and contracts gain due to the fuel of a high pressure applied to the control chamber when the injection ends), and improves the precision for calculating the third period Tds3.

Therefore, a preferred fuel injection device in accordance with the present invention divides the injection start delay time Tds into a first period Tds1 from when an electric current starts flowing into the electric valve until the valve in the electric valve starts moving for being opened, a second period Tds2 from when the valve starts moving for being opened until when the valve arrives at the fully opened position, and a third period Tds3 from when the valve has arrived at the fully opened position until the pressure Pcc in the control chamber decreases to a valve-opening pressure Popn; and calculates the first, second and third periods Tds1, Tds2 and Tds3 according to simple formulas.

Then, the fuel injection device determines an injection start delay time Tds from the sum of the first, second and third periods Tds1, Tds2 and Tds3.

The fuel injection device of a second preferred embodiment makes no distinction between the first period Tds1 and the second period Tds2 and simply calculates the sum of the first and second periods from when an electric current starts flowing into the electric valve until when the valve arrives at the fully opened position by using a simple formula, and adds together the sum of the first and second periods as well as the third period Tds3 to determine the injection start delay time Tds.

Other features and advantages of the present invention will be appreciated, as well as methods of operation and the function of the related parts from a study of the following detailed description, appended claims, and drawings, all of which form a part of this application. In the drawings:

Fig. 1 is a timing chart of a fuel injection device of the present invention illustrating variations in injection pulse, valve lift amount, control chamber pressure, needle lift amount, and injection rate;

Fig. 2 is a schematic diagram of an injector of the present invention in the form of a model;

Fig. 3 is a timing chart of the fuel injection device of the present invention illustrating a change in the control chamber pressure;

Fig. 4 is a graphical illustration of a relationship between a normalized pressure and an interior division ratio of the fuel injection device of the present invention;

Fig. 5 is a schematic diagram of a common rail type fuel injection device incorporating the principles of the present invention;

Fig. 6 is a cross-sectional side view of an injector in accordance with the principles of the present invention;

Fig. 7 is a timing chart of the fuel injector of Fig. 6 illustrating a relationship between an injection pulse and an actual injection when an injection quantity is small;

Fig. 8 is a timing chart of the fuel injector of Fig. 6 illustrating a relationship between an injection pulse and an actual injection when an injection quantity is large; and

Fig. 9 is a timing chart of a conventional fuel injector illustrating a relationship between an injection pulse and an actual injection.

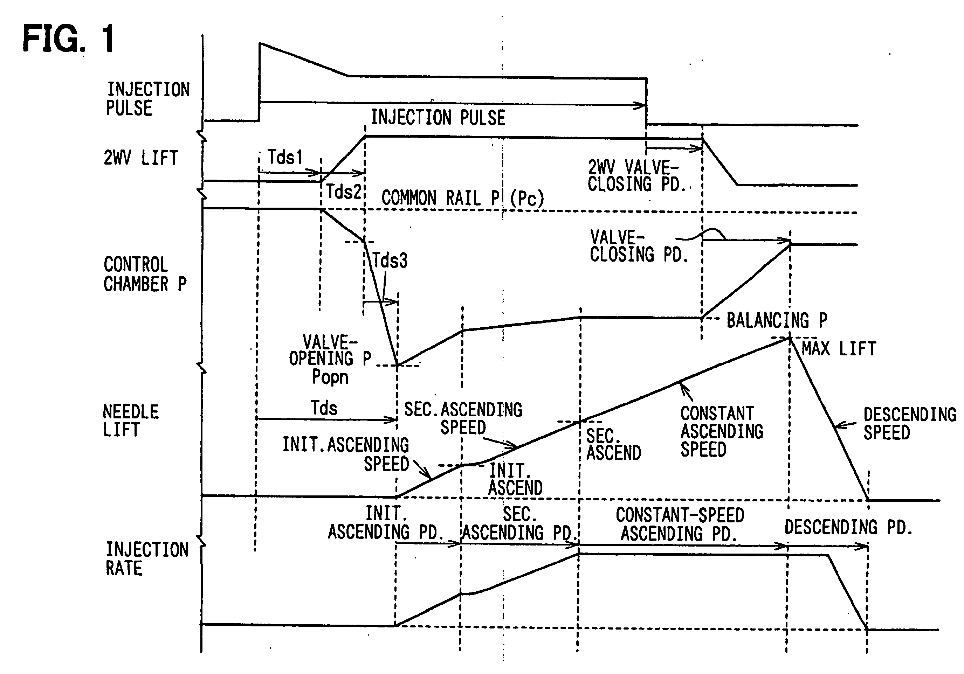

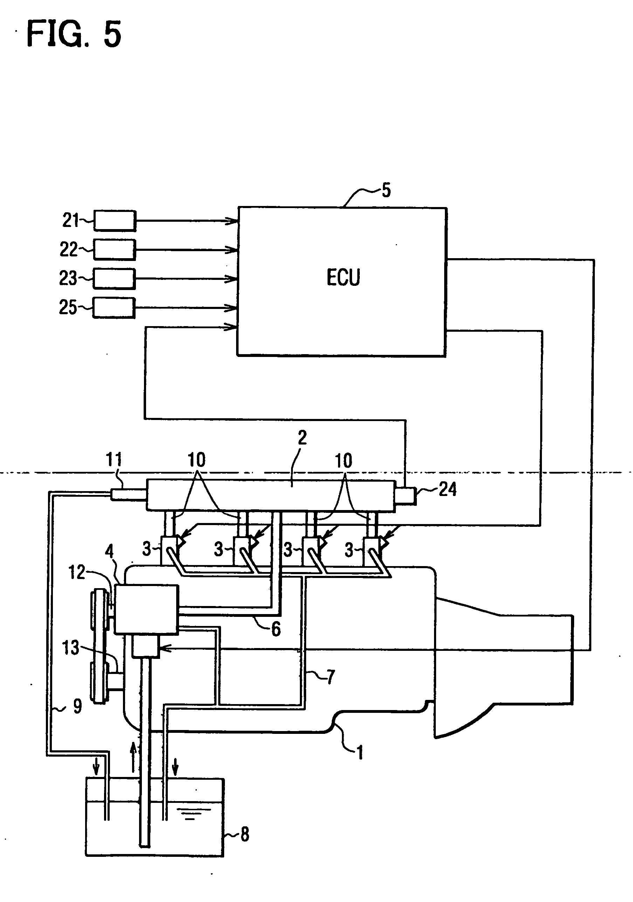

The principles of the present invention will now be described, with reference to Figs. 1 to 8, as being applied to a common rail-type fuel injection device. Specifically, the structure of the common rail type fuel injection device is described with reference to Fig. 5.

The common rail type fuel injection device is a system for injecting the fuel into, for example, a diesel engine (hereinafter referred to as engine) 1, and includes a common rail 2, injectors 3, a supply pump 4, and an engine control unit 5 (ECU).

The engine 1 includes a plurality of cylinders in which intake, compression, explosion, and exhaust are continuously executed. Though Fig. 5 illustrates a four-cylinder engine, there may be employed an engine having any number of cylinders.

The common rail 2 is a pressure-accumulating container for accumulating fuel at a high pressure to be fed to the injectors 3. The common rail 2 is connected to a blow-out port of the supply pump 4 that supplies, through a fuel pipe (high-pressure fuel flow passage) 6, the fuel at a high pressure so that a common rail pressure (corresponds to the fuel feed pressure to the injectors 3) pressurized to a high pressure is accumulated therein.

The fuel leaking from the injectors 3 is returned back to a fuel tank 8 through a leak pipe (fuel refluxing passage) 7.

A pressure limiter 11 is mounted in a relief pipe (fuel refluxing passage) 9 that extends from the common rail 2 to the fuel tank 8. The pressure limiter 11 is a valve that opens when the fuel pressure in the common rail 2 exceeds a predetermined threshold pressure. This is to control the fuel pressure in the common rail 2 to be less than or equal to the threshold pressure.

The injectors 3 are mounted in each cylinder of the engine 1 to inject the fuel therein. The injectors 3 are connected to a downstream end of each of a plurality of high-pressure fuel pipes 10 branched from the common rail 2. The injectors 3 inject the high-pressure fuel accumulated in the common rail 2 into each cylinder. The injectors 3 are all substantially identical to each other and their structure will be described in more detail later.

The supply pump 4 is a fuel pump for feeding the high-pressure fuel into the common rail 2 and includes a feed pump and a high-pressure pump. The feed pump is for sucking the fuel from the fuel tank 8 to the supply pump 4. The high-pressure pump is for pressurizing the fuel sucked by the feed pump to a high pressure and for feeding the pressurized fuel into the common rail 2. A common camshaft 12 drives the feed pump and high-pressure pump. As shown in Fig. 5, a crankshaft 13 of the engine 1 rotates the camshaft 12.

The supply pump 4 further includes a pump control valve (not shown) for adjusting the amount of fuel sucked by the high-pressure pump. The ECU 5 adjusts the pump control valve and, therefore, the common rail pressure Pc.

The ECU 5 includes a conventional microcomputer having a central processing unit (CPU) for executing a control processing operation and a calculation processing operation, a storage unit (memory such as ROM, standby RAM or EEPROM, RAM, etc.) for storing various programs and data, an input circuit, an output circuit, a power source circuit, an injector drive circuit and a pump drive circuit. Various processing operations are executed based on signals from sensors read by the ECU 5. The signals may be based on engine parameters such as operating conditions input by a driver and/or signals corresponding to the operating conditions of the engine 1.

Referring to Fig. 5, the sensors connected to the ECU 5 include an accelerator sensor 21 for detecting the accelerator opening degree, a rotational speed sensor 22 for detecting the engine rotational speed, a water temperature sensor 23 for detecting the cooling water temperature of the engine 1, a common rail pressure sensor 24 for detecting the common rail pressure Pc and other sensors 25.

Next, the fuel injection control executed by the ECU 5 will now be described.

Fuel is injected a multiplicity of times during one cycle to suppress engine vibration, engine noise, purify exhaust gas, achieve high engine output and high fuel efficiency while maintaining a high degree of dimension. The ECU 5 determines a required injection timing and a required injection amount Q that meets the present operating condition. This determination is based on a program (map, etc.) stored in the ROM and on the engine parameters read by the RAM for each injection of fuel. The ECU 5 starts injecting fuel from the injector 3 at a required injection timing and sends an injection pulse to the injector 3 so that the fuel is injected from the injector 3 in the required amount Q.

The ECU 5 transforms the rates of injection of the injector 3 into a simple model (figure) for controlling the injector 3 so as to obtain a required injection amount Q at the required injection timing. The ECU 5 further executes a model injection control operation to determine a drive signal generation timing (injection pulse ON timing) and a drive signal stop timing (injection pulse OFF timing) based on the model.

Described below is the model injection control.

The ECU 5 draws a geometrical figure representative of injection rates and having an area corresponding to the required injection amount Q to send an injection pulse to the injector 3, so that a required injection amount Q is obtained at the required injection timing.

The geometrical figure is drawn by the time axis and the injection rates of the injector 3. The ECU 5 includes a calculator for determining a drive signal generation timing and a drive signal stop timing for the injector 3 from the geometrical figure of injection rates having an area corresponding to the required injection amount Q. The geometrical figure of injection rates is drawn to encompass the conditions of the common rail pressure Pc fed to the injector 3 and the specifications of the injector 3.

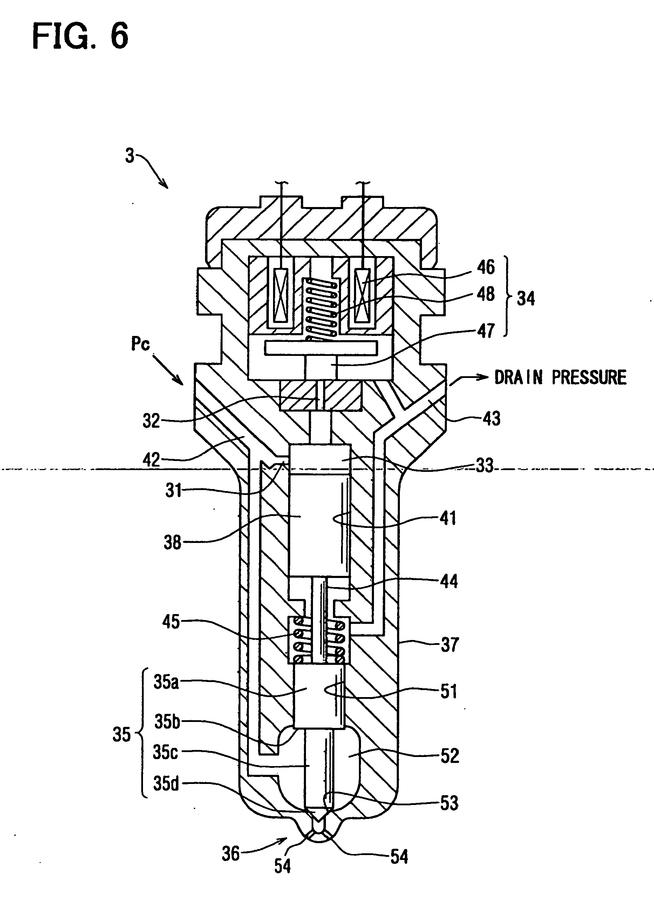

Prior to explaining the model injection control a basic structure of the injector 3 is described with reference to Fig. 6.

The injector 3 injects the high-pressure fuel fed from the common rail 2 into a cylinder of the engine 1 and includes a control chamber 33 which is fed with the common rail pressure Pc through a flow-in passage 31 (fuel passage in which an in-orifice is arranged) and from which the pressure is drained though a drain passage 32 (fuel passage in which an out-orifice is arranged), and possesses a nozzle 36 in which the drain passage 32 is opened and closed by an electromagnetic valve 34, and a needle 35 is ascended to inject the fuel when the control chamber pressure (pressure in the control chamber 33) Pcc drops down to a valve-opening pressure Popn.

In a housing 37 of the injector 3, there are formed a cylinder 41 for holding a command piston 38 so as to slide up and down (in a direction in which the needle 35 opens or closes the valve), a high-pressure fuel passage 42 for introducing the high-pressure fuel fed from the common rail 2 toward the side of the nozzle 36 and the flow-in passage 31, and a drain-pressure fuel passage 43 for draining the high-pressure fuel to the low pressure side.

The command piston 38 is inserted in the cylinder 41 and is coupled to the needle 35 via a pressure pin 44.

The pressure pin 44 is interposed between the command piston 38 and the needle 35 and is surrounded by a spring 45 that is arranged to bias the needle 35 downward (in a direction of closing the valve).

The control chamber 33 is formed on the upper side of the cylinder 41 (on the side of the electromagnetic valve 34) and varies its volume as the command piston 38 moves up and down.

The flow-in passage 31 is a fuel throttle on the inlet side for decreasing the pressure of the high-pressure fuel fed from the high-pressure fuel passage 42. The high-pressure fuel passage 42 communicates with the control chamber 33 through the flow-in passage 31.

The flow-out passage 32 is formed on the upper side of the control chamber 33 and is a fuel throttle on the outlet side to squeeze the fuel drained from the control chamber 33 into the drain-pressure fuel passage 43 (into the low pressure side). The control chamber 33 communicates with the drain-pressure fuel passage 43 through the drain passage 32.

The electromagnetic valve 34 includes a solenoid 46, which produces an electromagnetic force when it is served with a current (ON), a valve 47 attracted upward (in a direction of opening the valve) by the electromagnetic force produced by the solenoid 46, and a return spring 48 for biasing the valve 47 downward (in a direction of closing the valve).

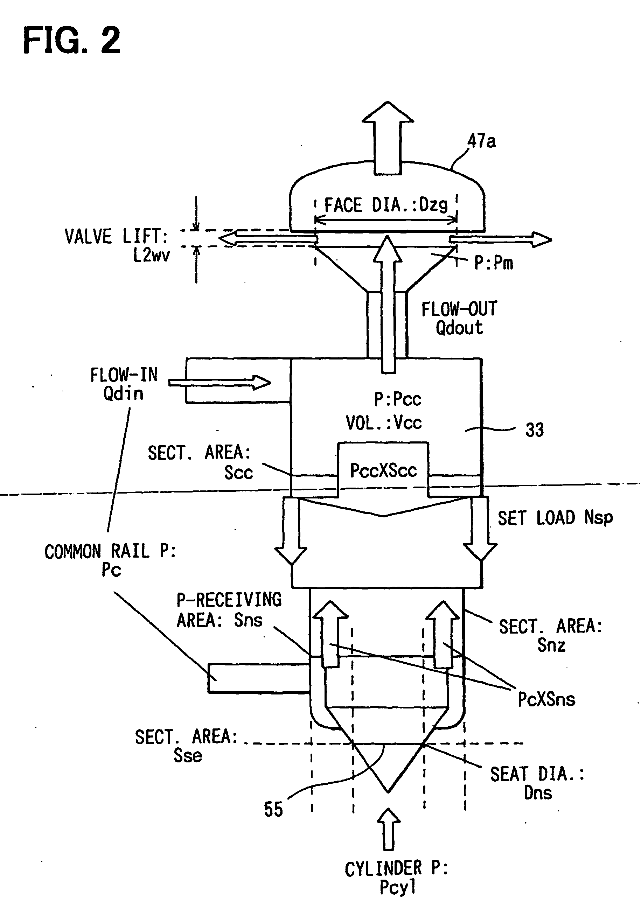

The valve 47 includes a ball valve 47a (shown in Fig. 2) for opening and closing the drain passage 32. In a state where the solenoid 46 is OFF, the valve 47 is pushed down due to the biasing force of the return spring 48 and the ball valve 47a closes the drain passage 32. In a state where the solenoid 46 is ON, the valve 47 moves upward overcoming the biasing force of the return spring 48 and the ball valve 47a is lifted up from the seat surface to open the drain passage 32.

In the housing 37 (e.g., nozzle body) of the injector 3, there is formed a slide hole 51 for holding the needle 35 so as to slide up and down (opening/closing direction), a nozzle chamber 52 communicating with the high-pressure fuel passage 42 and annularly formed along the outer periphery of the needle 35, a conical valve seat 53 on which the needle 35 is seated at the time of closing the valve, and a plurality of injection ports 54 for injecting the high-pressure fuel. The injection ports 54 are perforated on the inside of a seat diameter Dns of a seat 55 (sign, see Fig. 2) to which the needle 35 comes in contact when the needle 35 is seated on the valve seat 53.

The needle 35 includes a slide shaft portion 35a held in the slide hole 51, a pressure-receiving surface 35b formed at the lower part of the slide shaft portion 35a, a shaft 35c of a small diameter extending downward beyond the pressure-receiving surface 35b, and a conical valve 35d that seats on the valve seat 53 and moves away therefrom to open and close the injection ports 54. The slide shaft portion 35a reciprocates in the axial direction while maintaining the sealing between the nozzle chamber 52 and the low pressure side (periphery of the pressure pin 44).

The conical valve 35d disposed at the end of the needle 35 includes a circular truncated cone of the upper side, a conical end of the lower side, and a seat 55 at the boundary thereof. The angle of expansion of the circular truncated cone is smaller than the angle of expansion of the valve seat 53. The angle of expansion of the conical end is greater than the angle of expansion of the valve seat 53.

Namely, when the conical valve 35d seats on the valve seat 53, the seat 55 of the conical valve 35d comes into contact with the valve seat 53 to shut off the communication between the nozzle chamber 52 and the injection ports 54.

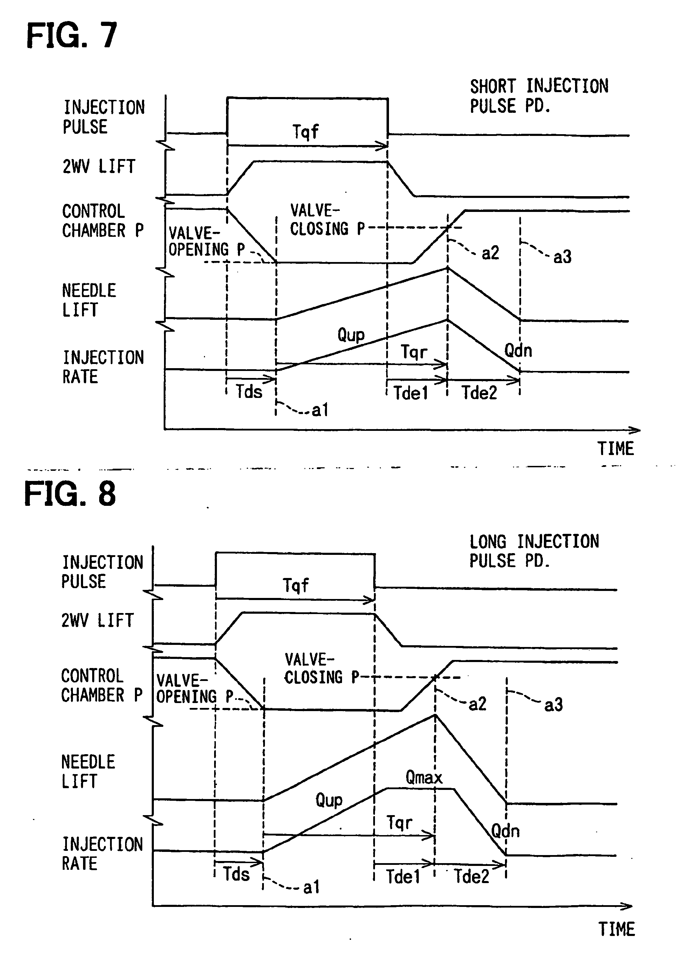

Next, the principle of operation of the injector 3 will be described with reference to Figs. 7 and 8.

When an injection pulse is given to the electromagnetic valve 34 from the ECU 5 (injection pulse ON), the electromagnetic valve 34 attracts the valve 47. When the valve 47 (2WV) starts lifting up, the drain passage 32 opens and the pressure in the control chamber 33 decreased through the flow-in passage 31 starts decreasing.

When the pressure in the control chamber 33 falls below the valve-opening pressure Popn, the needle 35 starts ascending. When the needle 35 disengages the valve seat 53, the nozzle chamber 52 communicates with the injection ports 54 and the high-pressure fuel fed to the nozzle chamber 52 is injected from the injection ports 54. It is important to note that the time from when the injection pulse is turned ON to when the injection actually starts is called the injection start delay time Tds. Calculation of the injection start delay time Tds will be described in more detail later.

The injection rate increases (increase of the injection rate is called increasing injection rate Qup) with the needle 35 ascending. After having arrived at a maximum injection rate Qmax, the increasing injection rate Qup does not increase any more (see Fig. 8).

When the injection pulse is no longer fed to the electromagnetic valve 34 from the ECU 5 (injection pulse OFF), the electromagnetic valve 34 stops attracting the valve 47, and the valve 47 starts descending. When the valve 47 in the electromagnetic valve 34 closes the drain passage 32, the pressure in the control chamber 33 starts increasing. When the pressure in the control chamber 33 becomes greater than the valve-closing pressure, the needle 35 starts descending. It is important to note that the time from when the injection pulse is turned OFF to when the needle 35 starts descending is called valve-closing pressure arriving time Tdel; the time from when the needle 35 starts rising to when it starts descending is called the needle ascending time Tqr; and a decrease in the injection rate that occurs while the needle 35 is descending is called a decreasing injection rate Qdn.

When the needle 35 descends and is seated on the valve seat 53, the communication is shut off between the nozzle chamber 52 and the injection ports 54 and no fuel is injected from the injection ports 54. It is important to note that the time from when the needle 35 starts descending until when the injection stops is identified as Tde2.

As described above, when the increasing injection rate Qup is is below the maximum injection rate Qmax (when the injection is small), a triangular figure is drawn, as shown in Fig. 7, along a time axis and the injection rates (increasing injection rate Qup and decreasing injection rate Qdn). When the increasing injection rate Qup reaches the maximum injection rate Qmax (when the injection is large), a trapezoidal figure is drawn as shown in Fig. 8 along the time axis and the injection rates (increasing injection rate Qup, maximum injection rate Qmax and decreasing injection rate Qdn).

Now, parameters in the geometrical figure of injection rates are described.

(1) In the case of a triangular geometrical figure of injection rates, the increasing injection rate Qup (small injection) without reaching the maximum injection rate Qmax.
The increasing injection rate Qup = func(Pc, Tint)
The decreasing injection rate Qdn = func(Pc)
Formula 4:
Needle ascending time Tqr = $\sqrt{12Q/Qup(1 + Qup/Qdn)}$
The injection start delay time Tds
The valve-closing pressure arriving time Tde1 = func(Pc)
The injection pulse period Tqf = Tqr + Tds - Tde1
The needle descending time Tde2 = Tqr(Qup/Qdn)
(2) In the case of a trapezoidal geometrical figure of injection rates, the increasing injection rate Qup (large injection) reaching the maximum injection rate Qmax.
The increasing injection rate Qup = func(Pc, Tint)
The decreasing injection rate Qdn = func(Pc)
The maximum injection rate Qmax = func(Pc)
Formula 5:

$$\text{Needle ascending time } Tqr = Qdn/(Qup + Qdn) \times Q/Qm + 1/2 \times Qm/Qup$$

The injection start delay time Tds
The valve-closing pressure arriving time Tde1 = func(Pc)
The injection pulse period Tqf = Tqr + Tds - Tde1
The needle descending time Tde2 = Tqr(Qup/Qdn)

In the above formulas, Tint is an interval (injection interval) during the multiplicity of injections, and the injection pulse period Tqf corresponds to a period from when a drive signal is generated (injection pulse ON) for the injector 3 tol when no drive signal is generated (injection pulse OFF). Further, func represents a function (function having specification conditions of the blow-out system of the injector 3) or a map (map formed depending upon the specification conditions of the blow-out system of the injector 3) stored in the storage unit, and is for deriving a numerical value from the function or the map. Furthermore, Pc is a common rail pressure read by the common rail pressure sensor 24 and corresponds to the pressure of the high-pressure fuel fed to the injector 3.

Here, the needle ascending time Tqr is determined from a required injection amount Q, increasing injection rate Qup, and decreasing injection rate Qdn. That is, the needle ascending time Tqr is determined from a relationship between the geometrical figure of injection rates and the required injection amount Q.

Referring to Figs. 7 and 8, the ECU 5 determines a moment of turning the injection pulse ON in advance of a moment a1 of starting the formation of the geometrical figure of injection rates relative to the time axis by the injection start delay time Tds. Namely, the timing for turning the injection pulse ON is determined from a1 -Tds.

By advancing the moment of turning the injection pulse ON ahead of the moment at which the injector 3 actually starts injecting the fuel by the injection start delay time Tds, the injection starts at an injection timing requested by the ECU 5.

The ECU 5, further, determines an injection pulse period Tqf by adding a needle ascending time Tqr to the injection start delay time Tds and subtracting a valve-closing pressure arriving time Tde1 therefrom. Namely, the injection pulse period Tqf is determined from (Tds + Tqr) - Tde1.

By determining an interval from the injection pulse ON to the injection pulse OFF from the injection pulse period Tqf, the moment of turning the injection pulse OFF is determined, and the injection amount Q requested by the ECU 5 can be actually injected from the injector 3.

In this embodiment, the moment of turning the injection pulse OFF was determined from the injection pulse period Tqf. However, the moment of turning the injection pulse OFF can also be determined by advancing it ahead of a moment a2 at which the pressure in the control chamber 33 reaches the valve-closing pressure by the valve-closing pressure arriving time Tde1. That is, the moment of turning the injection pulse OFF may be determined from a2 - Tde1.

Furthermore, the moment of turning the injection pulse OFF may be determined by advancing it ahead of a moment a3 of ending the formation of the geometrical figure of injection rates relative to the time axis by the valve-closing pressure arriving time Tde1 and by a needle descending time Tde2. That is, the moment of turning the injection pulse OFF may be determined from a3 - Tde1 - Tde2.

Described below with reference to Figs. 1 to 4 is how to calculate the injection start delay time Tds used in the above injection control.

The ECU 5 is programming a function of the calculator for determining the "injection start delay time Tds" between when a valve-opening instruction is given to the injector 3 (turn ON of the injection pulse) and when the injector 3 actually starts injecting the fuel.

Referring to Fig. 1, the calculator of the ECU 5 divides the injection start delay time Tds into first, second, and third periods Tds1, Tds2 and Tds3. Then, the first, second and third periods Tds1, Tds2 and Tds3 are calculated according to simple formulas and added up to determine an injection start delay time Tds.

The first period Tds1 is a time from when a current is fed to the electromagnetic valve 34 (injection pulse ON) until when the valve 47 of the electromagnetic valve 34 starts moving (ascending) for being opened.

The second period Tds2 is a time from when the valve 47 starts moving (ascending) for being opened until when the valve 47 reaches the fully opened position (until the valve 47 fully ascends).

The third period Tds3 is a time from when the valve 47 has reached the fully opened position until when the pressure Pcc in the control chamber decreases down to the valve-opening pressure Popn.

Next, the structure of the injector 3 is expressed as a simple model as shown in Fig. 2 to estimate the operation times (first, second, and third periods Tds1, Tds2 and Tds3) of the model of the injector 3. In calculating the first, second, and third periods Tds1, Tds2 and Tds3, described below are the calculation values (replaced values) in various portions of the model of the injector 3 of Fig. 2.

Common rail pressure (corresponds to fuel feed pressure): Pc

Pressure in the control chamber: Pcc

Volume of the control chamber: Vcc

Amount of fuel flowing into the control chamber 33 through the flow-in passage 31: Qdin

Amount of fuel flowing out from the control chamber 33 through the flow-out passage 32: Qdout

Area (face diameter) giving drain pressure to the ball valve 47a drained from the drain passage 32: Dzg

Pressure given to the ball valve 47a being drained from the drain passage 32: Pm

Lifting amount from a state where the valve 47 is seated up to a maximum lift: L2wv

Load given to the command piston 38 due to the pressure of fuel in the control chamber 33: Pcc x diameter Scc of command piston

Set load given to the needle 35 due to the spring 45: Nsp

Sectional area of nozzle receiving the pressure: Sns = sectional area of sliding shaft Snz - sectional area of nozzle seat Sse

Sectional area of nozzle seat: Sse = $\pi$ x (seat diameter Dns/2)$^2$

Load given to the needle 35 due to the fuel pressure in the nozzle chamber 52 (over-the-seat reaction pushing the needle 35 back to the valve-opening side): Pc x Sns

Pressure in the cylinder (pressure received from the exterior on the side of the injection ports 54 beyond the seat 55): Pcyl

Load given to the needle 35 from the exterior of the injection ports 54: Pcyl x Sse Nozzle reaction: Pc x Sns + Pcyl x Sse

The calculation hereinafter is conducted presuming that the pressure Pm is 0 without taking the face diameter Dzg into consideration. However, the accuracy of calculating the injection start delay time Tds (particularly, the third period Tds3) may be enhanced by taking the pressure Pm and the face diameter Dzg into consideration.

This embodiment uses the value obtained by multiplying the common rail pressure Pc given to the injector 3 by a coefficient that takes the pulsation into consideration in determining the pressure Pcc in the control chamber when the valve 47 has reached the fully opened position. This makes it possible to take into consideration a drop in the pressure Pcc in the control chamber when the valve 47 has reached the completely opened position and, therefore, to improve the precision for calculating the injection start delay time Tds (particularly, the third period Tds3).

The nozzle reaction is divided into an over-the-seat reaction for pushing the needle 35 back toward the valve-opening side upon receiving the common rail pressure Pc and an under-the-seat reaction, which the needle 35 receives from the exterior through the injection pores 54 on the side of the injection pores 54 beyond the seat 55.

By dividing the nozzle reaction into the over-the-seat reaction and the under-the-seat reaction, the calculation for determining the nozzle reaction can be simplified.

Here, the common rail pressure Pc, which takes the pulsation into consideration, is used for determining the over-the-seat reaction. The pulsation is determined from the interval (non-injecting period) in the injection of the last time and a map.

By taking the pulsation occurring in the common rail pressure Pc into consideration, as described above, the accuracy of estimating the over-the-seat reaction in the multiplicity of injections can be improved, as well as the accuracy of calculating the injection start delay time Tds (particularly, the third period Tds3).

To determine the under-the-seat reaction, the pressure Pcyl in the cylinder having the injector 3 for injecting the fuel is estimated and used. The pressure Pcyl in the cylinder is determined based on the crank angle counted by the rotational speed sensor 22 and the injection timing of the injector 3. When the pressure Pcyl in the cylinder increases due to the combustion of fuel injected last time, the pressure Pcyl in the cylinder is estimated based on the amount of injection of the last time in addition to the crank angle and the injection timing of the injector 3.

As described above, the under-the-seat reaction is determined by using the pressure Pcyl in the cylinder to automatically compensate for the effect of the pressure Pcyl in the cylinder upon the needle 35 making it possible to decrease the number of steps for conformance when the device is mounted on the engine 1.

In determining the nozzle reaction, the slide frictional force of the command piston 38 and the needle 35 may be used as an offset value to enhance the precision. By taking the weights of the command piston 38 and the needle 35 (of when they are mounted on the vehicle) into consideration, the weights may be used as offset values to calculate the nozzle reaction maintaining an enhanced precision.

The first period Tds1 is a constant that is dependent on the specifications of the injectors 3.

The first period Tds1 is chiefly an electric delay from when an injector signal is generated until when a current is supplied to the electromagnetic valve 34 and the valve 47 in the electromagnetic valve 34 starts opening. This remains constant for the same injector specifications irrespective of the common rail pressure Pc.

Thus, by using the first period Tds1 as a constant, the amount of data and the load of calculation can be decreased in the ECU 5. Furthermore, the number of steps for conformance can be decreased when the specifications of the injector 3 are changed.

The first period Tds1 may be determined based on a formula using, as parameters, an estimated pressure Pcc in the control chamber, a force for pushing the ball valve 47a toward the opening direction based on the outlet diameter (face diameter Dzg) of the drain passage 32 and the pressure Pm, and a voltage (e.g., charging voltage) applied to the electromagnetic valve 34.

Thus, the parameters can be properly reflected in the first period Tds1 to enhance the accuracy of calculating the injection start delay time Tds. Further, the number of steps for conformance can be decreased when the specifications of the injector 3 are changed.

The second period Tds2 is a time of from when the valve 47 starts ascending until when a maximum left is reached, i.e., is a time until the valve reaches the lifted amount L2wv. The second period Tds2 shortens as the common rail pressure Pc increases. The second period Tds2 varies in proportion to an inverse number of a square root of the common rail pressure Pc.

Concretely, the second period Tds2 is determined according to the following formula,
Formula 6:

$$Tds2 = \sqrt{2} \times L2wv/K \times Pc,$$

wherein K is a coefficient determined through experiment.

Thus, the common rail pressure Pc can be properly reflected in the second period Tds2 to enhance the precision for calculating the injection start delay time Tds. Further, the number of steps for conformance can be decreased when the specifications of the injector 3 are changed.

The time (second period Tds2) from the start of operation for opening (ascending) the valve 47 of the electromagnetic valve 34 until it is fully opened, shortens with an increase in the pressure Pcc in the control chamber. Therefore, the second period Tds2 varies in proportion to an inverse number of a square root of an estimated pressure Pcc in the control chamber.

Thus, the pressure Pcc in the control chamber can be properly reflected in the second period Tds2 to enhance the precision for calculating the injection start delay time Tds. Further, the number of steps for conformance can be decreased when the specifications of the injector 3 are changed.

The third period Tds3 is a time from when the valve 47 of the electromagnetic valve 34 has reached the fully opened position until when the injector 3 starts injecting, and the amount of change Pccdot in the pressure Pcc in the control chamber with the passage of time can be expressed by the following formula,

Formula 7:

$$ \text{Pccdot} = (\text{Ke/Vcc}) \times (\text{Qdin} - \text{Qdout}), $$

wherein Ke is a bulk modulus obtained through experiment.

The amount Qdin flowing into the control chamber and the amount Qdout flowing out from the control chamber can be determined from the following formulas,

Formula 8:

$$ \text{Qdin} = \text{Qdin0} \times \sqrt{\text{Pc} - \text{Pcc}} $$

Formula 9:

$$ \text{Qdout} = \text{Qdout0} \times \sqrt{\text{Pcc} - \text{Pm}}. $$

Formulas 8 and 9 are substituted for the above Formula 7, and the amount of change Pccdot with the passage of time is integrated from the common rail pressure Pc up to the valve-opening pressure Popn to determine the third period Tds3.

However, the load of the above integration calculation is very large and cannot be executed by the ECU 5 that is actually mounted on a vehicle from the standpoint of software processing load.

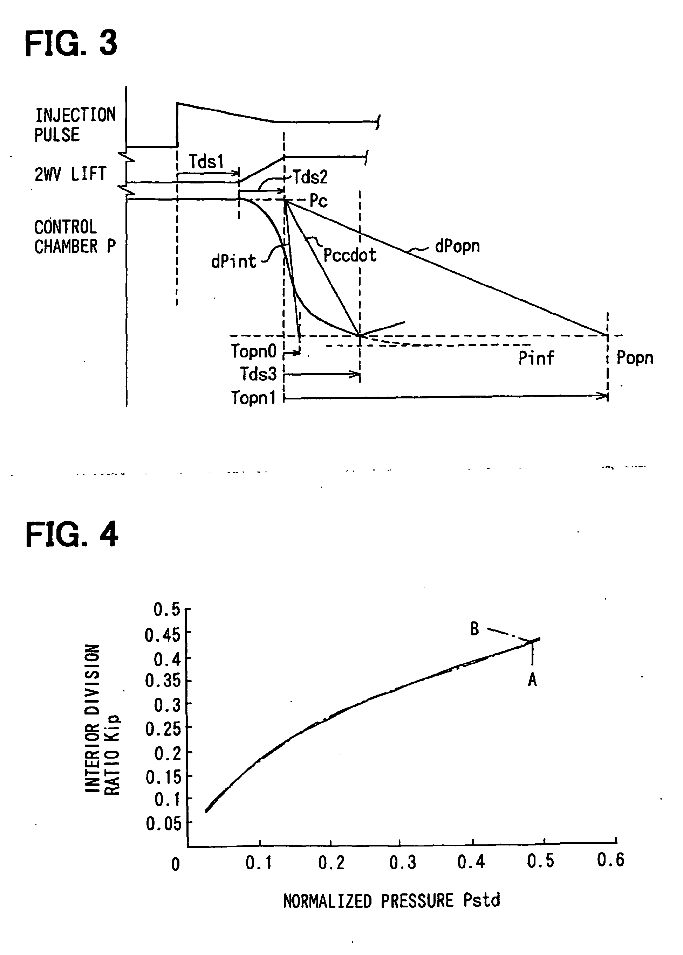

As illustrated in Fig. 3, therefore, the third period Tds3 is determined from an interior division formula using an initial pressure change rate dPint of the pressure Pcc in the control chamber when the valve 47 has arrived at the fully opened position and a valve-opening pressure change rate dPopn of the pressure Pcc in the control chamber when the pressure Pcc in the control chamber has reached the valve-opening pressure.

When the valve 47 starts ascending, the amount that flows in is Qdin = 0. From the above Formula 7, therefore, the initial pressure change rate dPint is expressed by the following formula,

Formula 10:

$$ \text{dPint} = -\text{Ke/Vcc} \times \text{Qdout0} \times \sqrt{\text{Pc}}. $$

The valve-opening pressure change rate dPopn, on the other hand, is expressed by the following formula,

Formula 11:

$$ \text{dPopn} = \text{Ke/Vcc} \times (\text{Qdin} \times \sqrt{\text{Pc} - \text{Popn}} - \text{Qdout} \times \sqrt{\text{Popn}}). $$

In the above Formulas 10 and 11, the pressure Pm is presumed to be 0 for simplifying the calculation. In the real phenomenon, the pressure should be considered based on the pressure Pcc in the control chamber after the valve 47 is fully opened. For simplifying the calculation, however, the pressure was presumed to vary from the initial pressure (common rail pressure Pc). Here, however, the initial pressure change rate dPint and the valve-opening pressure change rate dPopn may be determined based on the pressure Pm and on the pressure Pcc in the control chamber after the valve 47 is fully opened.

Thus, the third period Tds3 is determined by the interior division formula by using the initial pressure change rate dPint and the valve-opening pressure change rate dPopn without executing the integration processing in real time, and the load of processing in the third period Tds3 can be greatly decreased. This makes it possible to easily determine the third period Tds3 using the ECU 5 of a level that is actually mounted on a vehicle.

The shortest arriving time Topn0 from the initial pressure (common rail pressure Pc) to the valve-opening pressure Popn maintaining the initial pressure change rate dPint, is expressed by the following formula, Formula 12:

$$Topn0 = (Popn - Pc)/dPint.$$

The longest arriving time Topn1 from the initial pressure (common rail pressure Pc) to the valve-opening pressure Popn maintaining the valve-opening pressure change rate dPopn, is expressed by the following formula, Formula 13:

$$Topn1 = (Popn - Pc)/dPopn.$$

Referring to Fig. 3, the third period Tds3 necessarily exists between the shortest arriving time Topn0 and the longest arriving time Topn1. That is, if the interior division ratio Kip is determined for the shortest arriving time Topn0 and the longest arriving time Topn1, then, the third period Tds3 can be determined.

That is, if the third period Tds3 is equal to the pressure-dropping time Topn in the control chamber, then, the pressure-dropping time Topn in the control chamber can be expressed by the following formula, Formula 14:

$$Topn = (1 - Kip) \times Topn0 + Kip \times Topn1.$$

Described below is how to determine the interior division ratio Kip.

When the valve 47 in the electromagnetic valve 34 starts ascending, the fuel flows out from the control chamber 33 and the pressure Pcc in the control chamber drops. When the force for pushing down the command piston 38 and the needle 35 (toward the closing side) is balanced with the force for pushing upward (toward the opening side), the command piston 38 and the needle 35 start ascending. The pressure Pcc in the control chamber at this moment is the valve-opening pressure Popn.

Here, if a minimum valve-opening pressure Popn is considered, the pressure Pcc in the control chamber drops due to the drain of fuel through the drain passage 32 only when there is holding a relationship of flow-out amount Qdout > flow-in amount Qdin. This is because when there is holding a relationship flow-out amount Qdout < flow-in amount Qdin while the command piston 38 is at rest, the pressure Pcc in the control chamber increases since the volume Vcc of the control chamber remains constant.

Therefore, the valve-opening pressure Popn exists between the initial pressure (common rail pressure Pc) and the balancing pressure Pinf.

When a minimum valve-opening pressure Popn is the balancing pressure Pinf, the following relationship holds, Formula 15

$$Qdin \times \sqrt{Pc - Pinf} = Qdout \times \sqrt{Pinf - Pm}.$$

From Formula 15, the balancing pressure Pinf is determined from the following formula, Formula 16:

$$Pinf = (Pc \times Qdin^2)/(Qdin^2 + Qdout^2).$$

The valve-opening pressure Popn, on the other hand, is expressed by using a condition of balance of static forces between the nozzle-pushing force for pushing the command piston 38 and the nozzle 36 toward the valve-closing side relying upon the pressure Pcc in the control chamber and the set load Nsp of the spring 45 and the nozzle reaction for pushing the command piston 38 and the nozzle 36 back toward the opening side. The following relationship holds. Formula 17:

$$Popn \times Scc + Nsp = Pc \times Sns + Pcyl \times Sse.$$

From Formula 17, the valve-opening pressure Popn is determined according to the following formula, Formula 18:

$$Popn = (Pc \times Sns + Pcyl \times Sse - Nsp)/Scc.$$

Based on the balancing pressure Pinf, the normalized pressure Pstd normalized by the pressure levels is expressed by the following formula, Formula 19:

$$Pstd = (Popn - Pinf)/(Pc - Pinf).$$

The normalized pressure Pstd and the interior division ratio Kip exhibit characteristics as shown in Fig. 4.

That is, if the normalized pressure Pstd is determined from the above Formaulas 16, 18 and 19 and if the interior division ratio Kip is determined for the normalized pressure Pstd, then, there is determined the pressure-dropping time Topn in the control chamber based on the above Formula 14, i.e., there is determined the third period Tds3.

The relationship of the interior division ratio Kip to the normalized pressure Pstd may be illustrated by the map, but the amount of data increases in the ECU 5. In this embodiment, the relationship of interior division ratio Kip to the normalized pressure Pstd (see solid line A in Fig. 4) is approximated by an approximated formula (see a dot-dash chain line B in Fig. 4) of a polynomial such as a formula of third degree, and the approximation thereof is held as data in the ECU 5 (in Fig. 4, the solid line A and the dot-dash chain line B are not distinguishable because of approximation).

In determining the interior division ratio Kip as a value corresponded to the normalized pressure Pstd in this embodiment, as described above, the interior division ratio Kip is used as an approximated formula of polynomial. The precision for approximating the interior division ratio Kip can be enhanced by the polynomial. Further, since the interior division ratio Kip is determined by the approximated formula of polynomial, the amount of data written into the storage unit in the ECU 5 can be decreased compared to that of when the interior division ratio Kip is held by the map data.

Next, described below is how to correct the third period Tds3 determined above.

In determining the third period Tds3, when a moment at which the valve 47 has arrived at the opened position in the injection of this time is within a predetermined period of time of from when the valve 47 has arrived at the closed position in the injection of the last time, the ECU 5 executes a command piston extension/contraction correction to shorten the third period Tds3 as the time becomes close to the moment when the valve 47 has arrived at the closed position in the injection of the last time.

By correcting the command piston extension/contraction, it is made possible to eliminate variation in the third period Tds3 caused by the extension and contraction of the command piston 38 (the command piston 38 once extends when the pressure in the control chamber 33 drops in the injection of the last time, and contracts again due to the high-pressure fuel fed into the control chamber 33 at the end of injection) and to enhance the precision for calculating the third period Tds3.

As described above, the ECU 5 adds up the first, second and third periods Tds1, Tds2 and Tds3 for each injection to determine the injection start delay time Tds.

The fuel injection device of the common rail type of the embodiment 1 divides the injection start delay time Tds into three periods, i.e., first, second and third periods Tds1, Tds2 and Tds3. The device determines the first, second and third periods Tds1, Tds2 and Tds3 according to simple formulas.

Thus, responses in the portions of the first, second and third periods Tds1, Tds2 and Tds3 are simulated by a simple formula, and the required response times are separately calculated. Therefore, the injection start delay time Tds can be calculated without requiring tremendous amounts of conformance data unlike the prior art.

This makes it possible to decrease the amounts of data to be written in the storage unit in the ECU 5. Even when the specifications of the injector 3 are partly changed, the processing can be executed by changing the conformance values in the changed portions. Namely, the conformance processing can be easily executed even when the specifications of the injector 3 are changed.

In calculating the injection start delay time Tds in this embodiment, an estimation calculation is executed for estimating the pressure Pcc in the control chamber 33 from the common rail pressure Pc and the specification values of the injector 3, and the injection start delay time Tds is determined by using the estimated pressure Pcc in the control chamber. Thus, the injection start delay time Tds is calculated from the common rail pressure Pc and the specification values of the injector 3 without using additional sensors (a common rail pressure sensor 24 is usually mounted on the common rail type fuel injection device). That is, the injection start delay time Tds is calculated without using any additional sensor except the customarily used sensors. Further, the number of steps for conformance can be decreased when the specifications of the injector 3 are changed.

This embodiment uses the first period Tds1 as a constant dependent upon the specifications of the injector 3. The first period Tds1 is chiefly an electric delay from when an injector signal is generated (injection pulse ON) until when a current is fed to the electric valve 34 and the valve 47 in the electric valve 34 starts opening. This is constant in the same injector specifications irrespective of the common rail pressure Pc, and can be regarded to be a constant. By using the first period Tds1 as a constant, it is allowed to decrease the amount of data written into the storage unit in the ECU 5 and to decrease the load of calculation. It is further allowed to decrease the number of steps for conformance for calculating the first period Tds1 when the specifications of the injector 3 are changed.

In this embodiment, as represented by Formula 6, the second period Tds2 is determined as a value proportional to an inverse number of a square root of the common rail pressure Pc. It can be estimated that the second period Tds2 shortens as the common rail pressure Pc increases. Therefore, the second period Tds2 is determined as a value proportional to an inverse number of a square root of the common rail pressure Pc. Thus, the common rail pressure Pc is properly reflected in the second period Tds2 to improve precision for calculating the injection start delay time Tds. Further, the number of steps for conformance can be decreased when the specifications of the injector 3 are changed.

This embodiment determines the third period Tds3 from an interior division formula using an initial pressure change rate dPint of the pressure Pcc in the control chamber when the valve 47 has arrived at the fully opened position and a valve-opening pressure change rate dPopn of the pressure Pcc in the control chamber when the pressure Pcc in the control chamber has reached the valve-opening pressure. Therefore, the third period Tds3 is determined without executing the integration processing in real time, and the load of processing in the third period Tds3 can be greatly decreased. This makes it possible to easily determine the third period Tds3 using the ECU 5 of a level that is actually mounted on a vehicle.

If more concretely described, this embodiment determines a balancing pressure Pinf at which a flow rate Qdin of the fuel flowing into the control chamber 33 from the flow-in passage 31 is balanced with a flow rate Qdout of the fuel flowing out from the control chamber 33 through the drain passage 32 as expressed by the Formulas 15 to 19 in determining the third period Tds3, and determines a normalized pressure Pstd from the balancing pressure Pinf and the common rail pressure Pc.

Next, the interior division ratio Kip corresponding to the normalized pressure Pstd is determined by using the polynomial illustrated in Fig. 4.

Thereafter, as represented by the Formulas 10 to 14, the interior division ratio Kip is substituted for the interior division formula of the shortest arriving time Topn0 due to the initial pressure change rate dPint and of the longest arriving time Topn1 due to the valve-opening pressure change rate dPopn to determine the third period Tds3.

By determining the third period Tds3 through the above calculation, it is allowed to decrease the amount of data written into the storage unit in the ECU 5 and to decrease the load of calculation in the ECU 5.

In this embodiment, as represented by the Formulas 17 and 18, the valve-opening pressure Popn is calculated by using a static force balancing condition between a nozzle-pushing force for pushing the needle 35 and the command piston 38 toward the side of the injection ports 54 (closing side) and a nozzle reaction for pushing the needle 35 and command piston 38 back to the side of the control chamber 33 (opening side). Therefore, the third period Tds3 can be determined neglecting the dynamic effect of the injector 3; i.e., the third period Tds3 is determined through a greatly simplified calculation and the operation load can be decreased in the ECU 5.

The common rail type fuel injection device of this embodiment determines the timing for turning the injection pulse ON and the timing for turning the injection pulse OFF from the geometrical figure of injection rates having an area corresponding to the requested injection amount Q relying upon a model injection control. Therefore, the result of calculation (formation of geometrical figure of injection rates) based on a change in the injection start delay time Tds can be automatically reflected on other result of calculation (period from when the drive signal is generated until when the drive signal is no longer generated as derived from the geometrical figure of the injection rates).

That is, if only the injection start delay time Tds that varies being affected by the pulsation is conformed, the timing for turning the injection pulse ON and the timing for turning the injection pulse OFF corresponding to the requested injection timing and to the requested injection amount Q can be automatically determined from the geometrical figure of injection rates (triangle or trapezoid mentioned above) determined by the ECU 5.

Therefore, no correction map or correction calculation is necessary for each injection in the multiplicity of injections, and the number of steps for conformance can be greatly decreased in the ECU 5.

Described below are other examples of the model injection control according to the embodiment.

In the above-described embodiment, the increasing injection rate Qup, decreasing injection rate Qdn and maximum injection rate Qmax were directly determined, and the geometrical figure of injection rates was determined by using these values. The increasing injection rate Qup, decreasing injection rate Qdn and maximum injection rate Qmax were determined by using functions or maps based on the injector feed pressure (common rail pressure Pc) and on the specifications of the injector 3.

That is, in the above-described embodiment, the geometrical figure of injection rates was directly determined by using functions or maps based on the injector feed pressure (common rail pressure Pc) and the specifications of the injector 3.

In an alternative embodiment, a geometrical figure is first determined by relying on the time axis and the change in the amount of lifting the needle, and the geometrical figure of injection rates is determined by being converted from the geometrical figure of the needle lifting amounts.

Described below is how to determine the geometrical figure of injection rates from the geometrical figure of needle lifting amounts.

The injection region is divided into a seat squeezing region (region where the amount of injection is determined by the fuel feed pressure between the needle 35 and the valve seat 53: region of the increasing injection rate Qup and of the decreasing injection rate Qdn), and the injection squeezing region (region where the amount of injection is determined by the fuel feed pressure and by the amount of squeezing the injection hole 54: region of the maximum injection rate Qmax).

When the injection is effected in the seat squeezing region only, the geometrical figure (triangle) of the needle lifting amount is converted into a geometrical figure of injection rates (triangle). Concretely speaking, the injection flow rate characteristics (lift - flow rate characteristics) corresponding to the needle lifting amount is approximated by a formula of first degree to convert the injection rate (lift - injection rate) for the needle lifting amount.

Therefore, the geometrical figure (triangle) of injection rates is drawn when the increasing injection rate Qup fails to reach the maximum injection rate Qmax (when, for example, the injection is small).

When the injection is effected in the injection port squeezing region, too, in addition to the seat squeezing region, a geometrical figure (trapezoid) of needle lifting amounts is determined with a maximum value in the seat squeezing region as a value of the injection squeezing region. Next, the geometrical figure (trapezoid) of the needle lifting amounts is converted into a geometrical figure (trapezoid) of injection rates. Concretely speaking, the injection flow rate characteristics (lift - flow rate characteristics) corresponding to the needle lifting amount are approximated to convert the injection rate (lift injection rate) for the needle lifting amount.

Therefore, the geometrical figure (trapezoid) of injection rates is drawn when the increasing injection rate Qup reaches the maximum injection rate Qmax (when, for example, the injection is large).

Even by using this determined geometrical figure of injection rates, it is allowed to control the injector in the same manner as in the first embodiment.

In a third embodiment of the present invention, the ECU 5 is provided with a correction function (e.g., function for correcting dispersion among the cylinders) which, when a deviation in the engine rotational speed is detected by a rotational speed sensor 22 or the like, so changes the amount of injection as to eliminate the deviation.

Concretely speaking, when a deviation in the engine rotational speed is detected, the ECU 5 corrects, as adjustment parameters, at least one or more of the injection parameters (for forming a geometrical figure of injection rates) consisting of injection start delay time Tds, increasing injection rate Qup, decreasing injection rate Qdn, maximum injection rate Qmax, valve-closing pressure arriving time Tde1, needle ascending time Tqr and injection pulse period Tqf, to so change the injection amount as to eliminate the deviation. The corrected values of adjustment parameters are stored as learned values in the storage unit so as to be reflected in the next time of injection.

When the amount of deviation in the engine rotational speed varies, the correction function updates the corrected values of adjustment parameters depending upon the amount of change, and updates the corrected values of the updated adjustment parameters as learned values, so as to eliminate the deviation in the engine rotational speed at all times.

The correction function inclusive of learning prevents a drop in the precision of injection caused by a difference among the individual fuel injection devices (dispersion among the injectors 3) and caused by deterioration (e.g., variation in the seat diameter Dns).

In the correction function of the third embodiment just described, at least one or more adjusting parameters were corrected among the injection parameters consisting of injection start delay time Tds, increasing injection rate Qup, decreasing injection rate Qdn, maximum injection rate Qmax, valve-closing pressure arriving time Tde1, needle ascending time Tqr and injection pulse period Tqf.

In a fourth embodiment, the correction function uses two or more injection parameters as adjustment parameters at the time of correcting the deviation in the amount of injection, corrects the deviation in the amount of injection by weighting the adjustment parameters, stores the adjustment parameters as learned values, and reflects them in the injection of the next time.

As a concrete example, when the deviation in the engine rotational speed is detected, three parameters, i.e., injection start delay time Tds, increasing injection rate Qup and decreasing injection rate Qdn are corrected as adjustment parameters so as to eliminate the deviation. In this case, the injection start delay time Tds is corrected most heavily (e.g., weight ratio of 6), and the increasing injection rate Qup and the decreasing injection rate Qdn are lightly corrected (e.g, weight ratio of 2, respectively).

This makes it possible to correct the deviation in the amount of injection to meet a difference among the individual fuel injection devices and deterioration thereof, and to correct the deviation in the injection timing (start of injection, end of injection or both of them).

In the correction functions of the third and fourth embodiments, when the deviation in the engine rotational speed is detected, the values of the injection parameters (injection start delay time Tds, increasing injection ratio Qup, decreasing injection ratio Qdn, maximum injection ratio Qmax, valve-closing pressure arriving time Tde1, needle ascending time Tqr, injection pulse period Tqf) were directly corrected so as to eliminate the deviation.

In a fifth embodiment, the correction function, when the deviation in the engine rotational speed is detected, it is so estimated that the amount of deviation is due to changes in the parameters of predetermined portions determining the specifications of the injector 3, the parameters of the predetermined portions are used as adjustment parameters, and the adjustment parameters are stored as learned values, and are reflected in the injection of the next time.

A concrete example will now be described by using an injection start delay time Tds.

As described in the first embodiment, the injection start delay time Tds is calculated under the conditions of the common rail pressure Pc and the specifications of the injector 3.

When the deviation in the engine rotational speed is detected, it is so estimated that the amount of deviation is due to a change in the seat diameter Dns that determines the specification of the injector 3, and the value of the seat diameter Dns is changed.

Due to this change, the seat reaction (over-the-seat reaction + under-the-seat reaction) is corrected and, as a result, the value of the injection start delay time Tds is corrected.

Besides, by correcting the value of the seat diameter Dns only, the values of other injection parameters (such as increasing injection rate Qup and decreasing injection rate Qdn other than the injection start delay time Tds) formed by using the seat diameter Dns, too, can be corrected simultaneously.

By correcting parameters of predetermined portions determining the specifications of the injector 3, as described above, the injection parameters determined by using parameters of the predetermined portions can be corrected simultaneously. That is, since a corrected geometrical figure of injection rates is drawn, the secondary correction (correction of injection amount or injection timing) needs not be executed.

The above embodiments have dealt with examples of processing the effect of pulsation occurring in the multiplicity of injections relying on a small load of calculation. This invention, however, is not limited to the multiplicity of injections but can also be applied to, for example, a single injection in which the injection is effected one time in one cycle.

The multiplicity of injections may be a homogeneous multiplicity of injections in which the amount injected in one cycle is nearly equally divided into a multiplicity of times, may be a multiplicity of injections in which the injection in one cycle is divided into fine injections and a main injection effecting the fine injection one time or a plurality of times before the main injection, may be a multiplicity of injections in which the fine injection is effected one time or a plurality of times after the main injection, or may be a multiplicity of injections in which the fine injection is effected one time or a plurality of times before and after the main injection.

The above embodiments have employed the electromagnetic valve 34 that drives the valve 47 by the attractive force of the solenoid 46. However, there may be employed an electromagnetic valve using other electric actuator which drives the valve 47 upon supplying an electric current, such as driving the valve 47 by using a piezoelectric actuator.

The above embodiments have dealt with a case of applying the invention to the common rail type fuel injection device. The invention, however, may be applied to a fuel injection device that does not use the common rail. That is, the invention may be applied to a fuel injection device used, for example, for the gasoline engines other than the diesel engines.

The above embodiments have dealt with a case of affecting a model injection control for controlling the supply of current to the injectors 3. However, the injection start delay time Tds only may be calculated by using the invention in a control (e.g., injector control by using a control map) different from the model injection control. This makes it possible to decrease the calculation load and the calculation data for calculating the injection start delay time Tds and, hence, to decrease the load of the ECU 5.

In the above embodiments, a first period Tds1 of from when a current flow instruction is generated for the electromagnetic valve 34 until when the valve 47 starts ascending, is distinguished from a second period Tds2 of from when the valve 47 starts ascending until when the valve 47 arrives at the fully opened position, the first period Tds1 and the second period Tds2 are separately determined, and the first period Tds1, the second period Tds2 and a separately determined third period Tds3 are added up together to determine the injection start delay time Tds.

Without making distinction between the first period Tds1 and the second period Tds2, however, the sum of the first and second periods (a period of the sum of the first period and the second period) of from when a current flow instruction is generated for the electromagnetic valve 34 until when the valve 47 arrives at the fully opened position may be calculated by using a simple physical formula, and the sum of the first and second periods as well as the third period Tds3 determined from a separate formula may be added up together to determine the injection start delay time Tds.

This makes it possible to decrease the amount of calculation in the ECU 5, to decrease the load of calculation in the ECU 5 and to shorten the processing speed.

An injector (3) includes a simple model structure and the time required for the operation of an injection cycle is divided into a first period (Tds1), a second period (Tds2), and a third period (Tds3). The first period (Tds1) is from when an injection pulse is generated until when a valve (34) starts ascending. The second period (Tds2) is until when the valve (34) is fully opened. The third period (Tds3) is until when the pressure (Pcc) in a control chamber (33) decreases to a valve-opening pressure (Popn). These periods are calculated by using a simple formula. The injection start delay time (Tds) is determined from the sum thereof. This technology does not require tremendous amounts of conformance data for calculating the injection start delay time (Tds). Even when the specifications of the injector (3) are partly changed, conformance processing can be executed by changing conformance parameter in the changed portions of the process through a decreased number of steps.

## Claims

1. A fuel injection device comprising:

   an injector **(3)** having a control chamber **(33)** that receives a fuel feed pressure **(Pc)** through a flow-in passage **(31)** and from which the pressure is drained through a drain passage **(43),** an electric valve **(34)** that opens and closes the drain passage **(43),** and a nozzle **(36)** that opens to inject the fuel when a pressure **(Pcc)** in the control chamber **(33)** decreases to a valve-opening pressure **(Popn);** and
   a control unit **(5)** which controls an electric current fed to the electric valve **(34)** to control an injection timing of the injector **(3)**,

   **characterized in that**:

   the control unit **(5)** includes a calculator that:

      divides an injection start delay time Tds into:

         a first period **(Tds1)** from when the electric current starts flowing into the electric valve **(34)** to when the electric valve **(34)** starts moving toward an open position;
         a second period **(Tds2)** from when the electric valve **(34)** starts moving toward the open position to when the electric valve **(34)** arrives at a fully opened position; and
         a third period **(Tds3)** from when the electric valve **(34)** has arrived at the fully opened position to when the pressure **(Pcc)** in the control chamber **(33)** decreases to the valve-opening pressure **(Popn);**

      calculates the first, second, and third periods **(Tds1, Tds2 and Tds3)** according to simple formulas; and
      determines the injection start delay time **(Tds)** from when a valve-opening instruction is given to the injector **(3)** to when the injector **(3)** actually starts injecting fuel based on the sum of the first, second and third periods **(Tds1, Tds2 and Tds3)** calculated from the formulas.

2. A fuel injection device according to claim 1, wherein the calculator further:

   estimates the pressure **(Pcc)** in the control chamber **(33)** based on the fuel feed pressure **(Pc)** and at least one specification value of the injector **(3);** and

determines the injection start delay time **(Tds)** by using the estimated pressure **(Pcc)** in the control chamber **(33).**

3. A fuel injection device according to claim 2, wherein the first period **(Tds1)** is determined from a formula using an estimated pressure **(Pcc)** in the control chamber **(33),** a diameter of the drain passage **(43),** and a voltage value applied to the electric valve **(34).**

4. A fuel injection device according to claim 1, wherein the first period **(Tds1)** is a constant that is dependent upon the at least one specification of the injector **(3).**

5. A fuel injection device according to claim 2, wherein the second period **(Tds2)** is determined as a value proportional to an inverse number of a square root of the estimated pressure **(Pcc)** in the control chamber **(33).**

6. A fuel injection device according to claim 1, wherein the second period **(Tds2)** is determined as a value proportional to an inverse number of a square root of the fuel feed pressure **(Pc).**

7. A fuel injection device according to claim 2, wherein the third period **(Tds3)** is determined from an interior division formula using an initial pressure change rate **(dPint)** of the pressure **(Pcc)** in the control chamber **(33)** when the electric valve **(34)** has arrived at the fully opened position and a valve-opening pressure change rate **(dPopn)** of the pressure **(Pcc)** in the control chamber **(33)** when the pressure **(Pcc)** in the control chamber **(33)** has reached the valve-opening pressure **(Popn).**

8. A fuel injection device according to claim 7, wherein:

   a balancing pressure **(Pinf)** is determined at which a flow rate **(Qdin)** of the fuel flowing into the control chamber **(33)** from the flow-in passage **(31)** is balanced with a flow rate **(Qdout)** of the fuel flowing out from the control chamber **(33)** through the drain passage **(43);**
   a normalized pressure **(Pstd)** is determined from the balancing pressure **(Pinf)** and the fuel feed pressure **(Pc);**
   an interior division ratio **(Kip)** corresponding to the normalized pressure **(Pstd)** is determined; and
   the interior division ratio **(Kip)** is substituted for the interior division formula of the shortest arriving time **(Topn0)** due to the initial pressure change rate **(dPint)** and of the longest arriving time **(Topn1)** due to the valve-opening pressure change rate **(dPopn)** to determine the third period **(Tds3).**

9. A fuel injection device according to claim 8, wherein in determining the interior division ratio **(Kip)** corresponding to the normalized pressure **(Pstd),** the interior division ratio **(Kip)** is used as an approximated formula of a polynomial of a second or higher degree.

10. A fuel injection device according to claim 7, wherein the pressure **(Pcc)** in the control chamber **(33)** when the electric valve **(34)** has arrived at the fully opened position is obtained by multiplying the fuel feed pressure **(Pc)** by a coefficient that is determined by taking the pulsation into consideration.

11. A fuel injection device according to claim 7, wherein the valve-opening pressure **(Popn)** is calculated by using a static force balancing condition between a nozzle-pushing force for pushing a command piston **(38)** and a needle **(35)** toward the fuel injection port side and a nozzle reaction for pushing the command piston **(38)** and the needle **(35)** back to the control chamber side.

12. A fuel injection device according to claim 11, wherein in determining the nozzle reaction, the sliding frictional force of the command piston **(38)** and of the needle **(35)** is used as an offset value.

13. A fuel injection device according to claim 11, wherein the nozzle reaction is calculated after being divided into:

   an over-the-seat reaction by which the needle **(35)** is pushed back toward the valve opening side upon receiving the fuel feed pressure **(Pc);** and
   an under-the-seat reaction which is received from an external unit through the injection port on the side closer to the injection port than to the seat of the needle **(35).**

14. A fuel injection device according to claim 13, wherein determining the over-the-seat reaction uses the fuel feed pressure **(Pc)** taking the pulsation into consideration.

**15.** A fuel injection device according to claim 13, wherein in determining the under-the-seat reaction, a pressure **(Pcyl)** is estimated in a cylinder **(47)** in which the injector **(3)** is installed for injecting the fuel, and the estimated pressure **(Pcyl)** in the cylinder **(47)** is used.

**16.** A fuel injection device according to claim 7, wherein a moment at which the electric valve **(34)** arrives at the fully opened position during a current time is within a predetermined period of time between when the electric valve **(34)** arrived at the closed position in the injection of the last time, a command piston extension/contraction correction is effected to shorten the third period **(Tds3)** as the time becomes close to the moment at which the electric valve **(34)** has arrived at the closed position in the injection of the last time.

**17.** A fuel injection device comprising:

an injector **(3)** having a control chamber **(33)** that receives a fuel feed pressure **(Pc)** through a flow-in passage **(31)** and from which the pressure is drained through a drain passage **(43),** an electric valve **(34)** that opens and closes the drain passage **(43),** and a nozzle **(36)** that opens to inject the fuel when a pressure **(Pcc)** in the control chamber **(33)** decreases to a valve-opening pressure **(Popn);** and
a control unit **(5)** which controls an electric current fed to the electric valve **(34)** to control an injection timing of the injector **(3),**

**characterized in that**:

the control unit **(5)** includes a calculator that:

divides an injection start delay time Tds into:

one period **(Tds1+Tds2)** from when the electric current starts flowing into the electric valve **(34)** to when the electric valve **(34)** arrives at a fully opened position; and
an other period **(Tds3)** from when the electric valve **(34)** has arrived at the fully opened position to when the pressure **(Pcc)** in the control chamber **(33)** decreases to the valve-opening pressure **(Popn);**
calculates the one period **(Tds1+Tds2)** and the other period **(Tds3)** according to simple formulas; and
determines the injection start delay time **(Tds)** from when a valve-opening instruction is given to the injector **(3)** to when the injector **(3)** actually starts injecting fuel based on the sum of the one period and the other period calculated from the formulas.

**18.** A method of controlling a fuel injection device, comprising:

providing an injector **(3);**
providing an electrical valve **(34)** for controlling an injection amount of the injector **(3);**
**characterized by**
dividing an injection start delay time **(Tds)** of the injector **(3)** into a first period **(Tds1),** a second period **(Tds2),** and a third period **(Tds3),** wherein:

the first period **(Tds1)** is defined as beginning when an electric current starts flowing into the electric valve **(34)** and ending when the electric valve **(34)** starts moving toward an open position;
the second period **(Tds2)** is defined as beginning when the electric valve **(34)** starts moving toward the open position and ending when the electric valve **(34)** arrives at a fully opened position; and
the third period **(Tds3)** is defined as beginning when the electric valve **(34)** has arrived at the fully opened position and ending when a pressure **(Pcc)** in a control chamber **(33)** of the injector **(3)** decreases to a valve-opening pressure **(Popn);**

calculating the first, second, and third periods **(Tds1, Tds2 and Tds3)** according to simple predetermined formulas; and
determining the injection start delay time Tds, which is defined as beginning when a valve-opening instruction is given to the injector **(3)** and ending when the injector **(3)** actually starts injecting fuel, by summing the first, second, and third periods **(Tds1, Tds2 and Tds3)** previously calculated.

**Patentansprüche**

1. Kraftstoffeinspritzvorrichtung mit
einer Einspritzeinrichtung **(3)**, die eine Steuerungskammer **(33)**, die einen Kraftstoffförderdruck **(Pc)** durch einen Einströmungskanal **(31)** empfängt, und von der aus der Druck durch einen Abflusskanal **(43)** abfließen gelassen wird, ein elektrisches Ventil **(34)**, das den Abflusskanal **(43)** öffnet und schließt, und eine Düse **(36)** aufweist, die zum Einspritzen des Kraftstoffs öffnet, wenn ein Druck**(Pcc)** in der Steuerungskammer **(33)** sich auf einen Ventilöffnungsdruck **(Popn)** verringert; und
einer Steuerungseinheit **(5)**, die einen dem elektrischen Ventil **(34)** zugeführten elektrischen Strom zum Steuern eines Einspritzzeitverlaufs der Einspritzeinrichtung **(3)** steuert,
**dadurch gekennzeichnet, dass**:

die Steuerungseinheit **(5)** eine Berechnungseinrichtung aufweist, die:

eine Einspritzstartverzögerungszeit Tds aufteilt in:

eine erste Zeitdauer **(Tds1)** von dann, wenn der elektrische Strom beginnt, in das elektrische Ventil **(34)** zu fließen, bis dann, wenn das elektrische Ventil **(34)** beginnt, sich zu einer offenen Position zu bewegen;
eine zweite Zeitdauer **(Tds2)** von dann, wenn das elektrische Ventil **(34)** beginnt, sich zu der offenen Position zu bewegen, bis dann, wenn das elektrische Ventil **(34)** an einer vollständig geöffneten Position ankommt; und
eine dritte Zeitdauer **(Tds3)** von dann, wenn das elektrische Ventil **(34)** an der vollständig geöffneten Position angekommen ist, bis dann, wenn der Druck **(Pcc)** in der Steuerungskammer **(33)** sich auf den Ventilöffnungsdruck **(Popn)** verringert hat;

die erste, zweite und dritte Zeitdauern **(Tds1, Tds2 und Tds3)** entsprechend einfachen Gleichungen berechnet; und
die Einspritzstartverzögerungszeit **(Tds)** von dann, wenn eine Ventilöffnungsanweisung der Einspritzeinrichtung **(3)** zugeführt wird, bis dann, wenn die Einspritzeinrichtung **(3)** tatsächlich beginnt, Kraftstoff einzuspritzen, auf der Grundlage der Summe der anhand der Gleichungen berechneten ersten, zweiten und dritten Zeitdauern **(Tds1, Tds2 und Tds3)** berechnet.

2. Kraftstoffeinspritzvorrichtung nach Anspruch 1, wobei die Berechnungseinrichtung weiterhin:

den Druck **(Pcc)** in der Steuerungskammer **(33)** auf der Grundlage des Kraftstoffdrucks **(Pc)** und zumindest eines Spezifikationswerts der Einspritzeinrichtung **(3)** berechnet; und
die Einspritzstartverzögerungszeit **(Tds)** durch Verwendung des geschätzten Drucks **(Pcc)** in der Steuerungskammer **(33)** berechnet.

3. Kraftstoffeinspritzvorrichtung nach Anspruch 2, wobei die erste Zeitdauer **(Tds1)** anhand einer Gleichung bestimmt wird, die einen geschätzten Druck **(Pcc)** in der Steuerungskammer **(33)**, eine Durchmesser des Abflusskanals **(43)** und einen an das elektrische Ventil **(34)** angelegten Spannungswert verwendet.

4. Kraftstoffeinspritzvorrichtung nach Anspruch 1, wobei die erste Zeitdauer **(Tds1)** eine Konstante ist, die von der zumindest einen Spezifikation der Einspritzeinrichtung **(3)** abhängig ist.

5. Kraftstoffeinspritzvorrichtung nach Anspruch 2, wobei die zweite Zeitdauer **(Tds2)** als ein Wert bestimmt wird, der proportional zu einem Umkehrwert einer Quadratwurzel des geschätzten Drucks **(Pcc)** in der Steuerungskammer **(33)** ist.

6. Kraftstoffeinspritzvorrichtung nach Anspruch 1, wobei die zweite Zeitdauer **(Tds2)** als ein Wert bestimmt wird, der proportional zu einem Umkehrwert einer Quadratwurzel des Kraftstoffförderdrucks **(Pc)** ist.

7. Kraftstoffeinspritzvorrichtung nach Anspruch 2, wobei die dritte Zeitdauer **(Tds3)** anhand einer Innenteilungsgleichung bestimmt wird, die eine Anfangsdruckänderungsrate **(dPint)** des Drucks **(pcc)** in der Steuerungskammer **(33)**, wenn das elektrische Ventil **(34)** an der vollständig geöffneten Position angekommen ist, und eine Ventilöffnungsdruckänderungsrate **(dPopn)** des Drucks **(Pcc)** in der Steuerungskammer **(33)**, wenn der Druck **(Pcc)** in der Steuerungskammer **(33)** den Ventilöffnungsdruck **(Popn)** erreicht hat, verwendet.

8. Kraftstoffeinspritzvorrichtung nach Anspruch 7, wobei:

ein Ausgleichsdruck **(Pinf)** bestimmt wird, bei dem eine Strömungsrate **(Qdin)** des aus dem Einströmungskanal **(31)** in die Steuerungskammer **(33)** strömenden Kraftstoffs mit einer Strömungsrate **(Qdout)** des aus der Steuerungskammer **(33)** durch den Abflusskanal (43) ausströmenden Kraftstoff ausgeglichen wird;
ein normalisierter Druck **(Pstd)** anhand des Ausgleichsdrucks **(Pinf)** und des Kraftstoffförderdrucks **(Pc)** bestimmt wird;
ein Innenteilungsverhältnis **(Kip)** entsprechend dem normalisierten Druck **(Pstd)** bestimmt wird; und
die Innenteilungsgleichung der kürzesten Ankunftzeit **(TopO)** aufgrund der Anfangsdruckänderungsrate **(dPint)** und der längsten Ankunftzeit **(Topn1)** aufgrund der Ventilöffnungsdruckänderungsrate **(dPopn)** durch das Innenteilungsverhältnis **(Kip)** ersetzt wird, um die dritte Zeitdauer **(Tds3)** zu bestimmen.

9. Kraftstoffeinspritzvorrichtung nach Anspruch 8, wobei bei der Bestimmung des Innenteilungsverhältnisses **(Kip)** entsprechend dem normalisierten Druck **(Pstd)** das Innenteilungsverhältnis **(Kip)** als eine angenäherte Gleichung eines Polynoms zweiten oder höheren Grades verwendet wird.

10. Kraftstoffeinspritzvorrichtung nach Anspruch 7, wobei der Druck **(Pcc)** in der Steuerungskammer **(33),** wenn das elektrische Ventil **(34)** an der vollständig geöffneten Position angekommen ist, erhalten wird durch Multiplizieren des Kraftstoffförderdrucks **(Pc)** mit einem Koeffizienten, der unter Berücksichtigung der Pulsierung bestimmt wird.

11. Kraftstoffeinspritzvorrichtung nach Anspruch 7, wobei der Ventilöffnungsdruck **(Popn)** unter Verwendung einer statischen Kraftausgleichsbedingung zwischen einer Düsenanhebekraft zum Anheben eines Befehlskolbens **(38)** und einer Nadel **(35)** zu der Kraftstoffeinspritzanschlussseite und einer Düsenreaktion zum Anheben des Befehlskolbens **(38)** und der Nadel **(35)** zurück zu der Steuerungskammerseite.

12. Kraftstoffeinspritzvorrichtung nach Anspruch 11, wobei bei der Bestimmung der Düsenreaktion die Gleit-Reibungskraft des Befehlskolbens **(38)** und der Nadel **(35)** als Versatzwert verwendet wird.

13. Kraftstoffeinspritzvorrichtung nach Anspruch 11, wobei die Düsenreaktion berechnet wird, nachdem sie unterteilt wurde in:

eine Über-Sitz-Reaktion, durch die die Nadel **(35)** zu der Ventilöffnungsseite bei Empfang des Kraftstoffförderdrucks **(Pc)** zurückgeschoben wird; und
eine Unter-Sitz-Reaktion, die von einer externen Einheit durch den Einspritzanschluss auf der Seite empfangen wird, die näher an dem Einspritzanschluss als an dem Sitz der Nadel **(35)** ist.

14. Kraftstoffeinspritzvorrichtung nach Anspruch 13, wobei die Bestimmung der Über-Sitz-Reaktion den Kraftstoffdruck **(Pc)** unter Berücksichtigung der Pulsierung verwendet.

15. Kraftstoffeinspritzvorrichtung nach Anspruch 13, wobei bei der Bestimmung der Unter-Sitz-Reaktion ein Druck **(Pcyl)** in einem Zylinder **(47)** geschätzt wird, in dem die Einspritzeinrichtung (3) zum Einspritzen des Kraftstoffs eingebaut ist, und der geschätzte Druck **(Pcyl)** in dem Zylinder **(47)** verwendet wird.

16. Kraftstoffeinspritzvorrichtung nach Anspruch 7, wobei ein Zeitpunkt, zu dem das elektrische Ventil **(34)** an der vollständig geöffneten Position während eines gegenwärtigen Mals ankommt, innerhalb einer vorbestimmten Zeitdauer bis dann, wenn das elektrische Ventil **(34)** an der vollständig geschlossenen Position bei der Einspritzung zu einem letzten Mal angekommen ist, liegt, eine Befehlskolben-Expansions-/Kontraktionskorrektur bewirkt wird, um die dritte Zeitdauer **(Tds3)** zu verkürzen, während die Zeit nahe an den Zeitpunkt kommt, zu dem das elektrische Ventil **(34)** an der geschlossenen Position bei der Einspritzung beim letzten Mal angekommen ist.

17. Kraftstoffeinspritzvorrichtung mit
einer Einspritzeinrichtung **(3),** die eine Steuerungskammer **(33),** die einen Kraftstoffförderdruck **(Pc)** durch einen Einströmungskanal **(31)** empfängt, und von der aus der Druck durch einen Abflusskanal **(43)** abfließen gelassen wird, ein elektrisches Ventil **(34),** das den Abflusskanal **(43)** öffnet und schließt, und eine Düse **(36)** aufweist, die zum Einspritzen des Kraftstoffs öffnet, wenn ein Druck **(Pcc)** in der Steuerungskammer **(33)** sich auf einen Ventilöffnungsdruck **(Popn)** verringert; und

einer Steuerungseinheit **(5)**, die einen dem elektrischen Ventil **(34)** zugeführten elektrischen Strom zum Steuern eines Einspritzzeitverlaufs der Einspritzeinrichtung **(3)** steuert,
**dadurch gekennzeichnet, dass**:

die Steuerungseinheit **(5)** eine Berechnungseinrichtung aufweist, die:

eine Einspritzstartverzögerungszeit Tds aufteilt in:

eine Zeitdauer **(Tds1+Tds2)** von dann, wenn der elektrische Strom beginnt, in das elektrische Ventil **(34)** zu fließen, bis dann, wenn das elektrische Ventil **(34)** an einer vollständig geöffneten Position ankommt; und
eine andere Zeitdauer **(Tds3)** von dann, wenn wenn das elektrische Ventil **(34)** an der vollständig geöffneten Position angekommen ist, bis dann, wenn der Druck **(Pcc)** in der Steuerungskammer **(33)** sich auf den Ventilöffnungsdruck **(Popn)** verringert hat;

die eine Zeitdauer **(Tds1 + Tds2)** und die andere Zeitdauer **(Tds3)** entsprechend einfachen Gleichungen berechnet; und
die Einspritzstartverzögerungszeit **(Tds)** von dann, wenn eine Ventilöffnungsanweisung der Einspritzeinrichtung **(3)** zugeführt wird, bis dann, wenn die Einspritzeinrichtung **(3)** tatsächlich beginnt, Kraftstoff einzuspritzen, auf der Grundlage der Summe der einen Zeitdauer und der anderen Zeitdauer bestimmt, die anhand der Gleichungen berechnet werden.

18. Verfahren zur Steuerung einer Kraftstoffeinspritzvorrichtung mit:

Bereitstellen einer Einspritzeinrichtung **(3)**;
Bereitstellen eines elektrischen Ventils **(34)** zur Steuerung einer Einspritzmenge der Einspritzeinrichtung **(3)**;
**gekennzeichnet durch**
Unterteilen der Einspritzstartverzögerungszeit **(Tds)** der Einspritzeinrichtung **(3)** in eine erste Zeitdauer **(Tds1),** eine zweite Zeitdauer **(Tds2)** und eine dritte Zeitdauer (Tds3), wobei

die erste Zeitdauer definiert ist, zu beginnen, wenn ein elektrischer Strom beginnt, in das elektrische Ventil **(34)** zu fließen, und zu enden, wenn das elektrische Ventil **(34)** beginnt, sich zu einer offenen Position zu bewegen;
die zweite Zeitdauer **(Tds2)** definiert ist, zu beginnen, wenn das elektrische Ventil **(34)** beginnt, sich zu der offenen Position zu bewegen, und zu enden, wenn das elektrische Ventil **(34)** an einer vollständig geöffneten Position ankommt; und
die dritte Zeitdauer **(Tds3)** definiert ist, zu beginnen, wenn das elektrische Ventil **(34)** an der vollständig geöffneten Position angekommen ist, und zu enden, wenn ein Druck **(Pcc)** in einer Steuerungskammer **(33)** der Einspritzeinrichtung **(3)** sich auf den Ventilöffnungsdruck **(Popn)** verringert hat;

Berechnen der ersten, zweiten und dritten Zeitdauern **(Tds1, Tds2 und Tds3)** entsprechend einfachen Gleichungen; und
Bestimmen der Einspritzstartverzögerungszeit **(Tds),** die definiert ist, zu beginnen, wenn eine Ventilöffnungsanweisung der Einspritzeinrichtung **(3)** zugeführt wird, und zu enden, wenn die Einspritzeinrichtung **(3)** tatsächlich beginnt, Kraftstoff einzuspritzen, **durch** Summieren der anhand der Gleichungen berechneten ersten, zweiten und dritten Zeitdauern **(Tds1, Tds2 und Tds3).**

**Revendications**

1. Dispositif d'inj ection de carburant comprenant :

un injecteur (3) ayant une chambre de commande (33) qui reçoit une pression d'alimentation en carburant (Pc) par l'intermédiaire d'un passage d'entrée (31) et depuis laquelle la pression est évacuée par un passage d'évacuation (43), une électrovanne (34) qui ouvre et ferme le passage d'évacuation (43), et une buse (36) qui s'ouvre pour injecter le carburant quand une pression (Pcc) dans la chambre de commande (33) diminue pour atteindre une pression d'ouverture de la vanne (Popn) ; et
une unité de commande (5) qui commande un courant électrique fourni à l'électrovanne (34) pour commander une synchronisation de l'injection de l'injecteur (3), **caractérisé en ce que** :

l'unité de commande (5) inclut un calculateur qui :

divise un temps de retard de début d'injection Tds en :

une première période (Tds1) allant du moment où le courant électrique commence à passer dans l'électrovanne (34) jusqu'au moment où l'électrovanne (34) commence à se déplacer vers une position ouverte ;

une deuxième période (Tds2) allant du moment où l'électrovanne (34) commence à se déplacer vers la position ouverte jusqu'au moment où l'électrovanne (34) atteint une position complètement ouverte ; et

une troisième période (Tds3) allant du moment où l'électrovanne (34) a atteint la position complètement ouverte jusqu'au moment où la pression (Pcc) dans la chambre de commande (33) diminue pour atteindre la pression d'ouverture de la vanne (Popn) ;

calcule les première, deuxième et troisième périodes (Tds1 Tds2 et Tds3) en fonction de formules simples ; et

détermine le temps de retard de début d'injection (Tds) depuis le moment où une instruction d'ouverture de la vanne est transmise à l'injecteur (3) jusqu'au moment où l'injecteur (3) commence réellement à injecter le carburant sur la base de la somme des première, deuxième et troisième périodes (Tds1, Tds2 et Tds3) calculées à partir des formules.

2.	Dispositif d'injection de carburant selon la revendication 1, dans lequel en outre le calculateur :

estime la pression (Pcc) dans la chambre de commande (33) sur la base de la pression d'alimentation en carburant (Pc) et d'au moins une valeur caractéristique de l'injecteur (3) ; et

détermine le temps de retard de début d'injection (Tds) en utilisant la pression (Pcc) estimée dans la chambre de commande (33).

3.	Dispositif d'injection de carburant selon la revendication 2, dans lequel la première période (Tds1) est déterminée à partir d'une formule utilisant une pression (Pcc) estimée dans la chambre de commande (33), un diamètre du passage d'évacuation (43), et une valeur de tension appliquée à l'électrovanne (34).

4.	Dispositif d'injection de carburant selon la revendication 1, dans lequel la première période (Tds1) est une constante qui dépend de ladite au moins une caractéristique de l'injecteur (3).

5.	Dispositif d'injection de carburant selon la revendication 2, dans lequel la deuxième période (Tds2) est déterminée sous la forme d'une valeur proportionnelle à un nombre inverse d'une racine carrée de la pression (Pcc) estimée dans la chambre de commande (33).

6.	Dispositif d'injection de carburant selon la revendication 1, dans lequel la deuxième période (Tds2) est déterminée sous la forme d'une valeur proportionnelle à un nombre inverse d'une racine carrée de la pression d'alimentation en carburant (Pc).

7.	Dispositif d'injection de carburant selon la revendication 2, dans lequel troisième période (Tds3) est déterminée à partir d'une formule de division intérieure utilisant un taux de variation de pression initiale (dPint) de la pression (Pcc) dans la chambre de commande (33) lorsque l'électrovanne (34) a atteint la position complètement ouverte et un taux de variation de pression d'ouverture de la vanne (dPopn) de la pression (Pcc) dans la chambre de commande (33) lorsque la pression (Pcc) dans la chambre de commande (33) a atteint la pression d'ouverture de la vanne (Popn).

8.	Dispositif d'injection de carburant selon la revendication 7, dans lequel :

une pression d'équilibrage (Pinf) est déterminée à laquelle un débit (Qdin) du carburant s'écoulant dans la chambre de commande (33) depuis le passage d'entrée (31) est équilibrée par un débit (Qdout) du carburant sortant de la chambre de commande (33) par le passage d'évacuation (43) ;

une pression normalisée (Pstd) est déterminée à partir de la pression d'équilibrage (Pinf) et de la pression d'alimentation en carburant (Pc) ;

un rapport de division intérieur (Kip) correspondant à la pression normalisée (Pstd) est déterminé ; et

le rapport de division intérieur (Kip) remplace la formule de division intérieure du temps d'arrivée le plus court (Topn0) dû au taux de variation de pression initiale (dPint) et du temps d'arrivée le plus long (Topn1) dû au taux de variation de pression d'ouverture de la vanne (dPopn) pour déterminer la troisième période (Tds3).

9. Dispositif d'injection de carburant selon la revendication 8, dans lequel, lors de la détermination du rapport de division intérieur (Kip) correspondant à la pression normalisée (Pstd), le rapport de division intérieur (Kip) est utilisé comme une formule approximative d'un polynôme d'un deuxième degré ou d'un degré supérieur.

10. Dispositif d'injection de carburant selon la revendication 7, dans lequel la pression (Pcc) dans la chambre de commande (33) lorsque l'électrovanne (34) a atteint la position complètement ouverte est obtenue en multipliant la pression d'alimentation en carburant (Pc) par un coefficient qui est déterminé en prenant en compte la pulsation.

11. Dispositif d'injection de carburant selon la revendication 7, dans lequel la pression d'ouverture de la vanne (Popn) est calculée en utilisant une condition d'équilibrage de force statique entre une force de poussée de buse pour pousser un piston de commande (38) et une aiguille (35) vers le côté orifice d'injection de carburant et une réaction de buse pour repousser le piston de commande (38) et l'aiguille (35) vers le côté chambre de commande.

12. Dispositif d'injection de carburant selon la revendication 11, dans lequel, lors de la détermination de la réaction de buse, la force de frottement par glissement du piston de commande (38) et de l'aiguille (35) est utilisée comme une valeur de décalage.

13. Dispositif d'injection de carburant selon la revendication 11, dans lequel la réaction de buse est calculée après avoir été divisée en :

    une réaction au-dessus du siège par laquelle l'aiguille (35) est repoussée vers le côté ouverture de la vanne lorsque la pression d'alimentation en carburant (Pc) est reçue ; et
    une réaction au-dessous du siège qui est reçue d'une unité extérieure par l'intermédiaire de l'orifice d'injection du côté plus proche de l'orifice d'injection que du siège de l'aiguille (35).

14. Dispositif d'injection de carburant selon la revendication 13, dans lequel la détermination de la réaction au-dessus du siège utilise la pression d'alimentation en carburant (Pc) prenant en compte la pulsation.

15. Dispositif d'injection de carburant selon la revendication 13, dans lequel, lors de la détermination de la réaction au-dessous du siège, une pression (Pcyl) est estimée dans un cylindre (47) dans lequel l'injecteur (3) est installé pour injecter le carburant, et la pression (Pcyl) estimée dans le cylindre (47) est utilisée.

16. Dispositif d'injection de carburant selon la revendication 7, dans lequel un moment auquel l'électrovanne (34) atteint la position complètement ouverte durant un temps actuel est compris dans une période prédéterminée de temps jusqu'au moment où l'électrovanne (34) atteint la position fermée lors de la dernière injection, une correction de l'extension / rétraction du piston de commande est effectuée pour raccourcir la troisième période (Tds3) lorsque l'on se rapproche du moment où l'électrovanne (34) a atteint la position fermée lors de la dernière injection.

17. Dispositif d'injection de carburant comprenant :

    un injecteur (3) ayant une chambre de commande (33) qui reçoit une pression d'alimentation en carburant (Pc) par l'intermédiaire d'un passage d'entrée (31) et depuis laquelle la pression est évacuée par un passage d'évacuation (43), une électrovanne (34) qui ouvre et ferme le passage d'évacuation (43), et une buse (36) qui s'ouvre pour injecter le carburant quand une pression (Pcc) dans la chambre de commande (33) diminue pour atteindre une pression d'ouverture de la vanne (Popn) ; et
    une unité de commande (5) qui commande un courant électrique fourni à l'électrovanne (34) pour commander une synchronisation de l'injection de l'injecteur (3), **caractérisé en ce que** :

        l'unité de commande (5) inclut un calculateur qui :

            divise un temps de retard de début d'injection Tds en :

                une période (Tds1 + Tds2) allant du moment où le courant électrique commence à passer dans l'électrovanne (34) jusqu'au moment où l'électrovanne (34) atteint une position complètement ouverte ; et

une autre période (Tds3) allant du moment où l'électrovanne (34) a atteint la position complètement ouverte jusqu'au moment où la pression (Pcc) dans la chambre de commande (33) diminue pour atteindre la pression d'ouverture de la vanne (Popn) ;

calcule la période (Tds1 + Tds2) et l'autre période (Tds3) en fonction de formules simples ; et

détermine le temps de retard de début d'injection (Tds) depuis le moment où une instruction d'ouverture de la vanne est transmise à l'injecteur (3) jusqu'au moment où l'injecteur (3) commence réellement à injecter le carburant sur la base de la somme de la période et l'autre période calculées à partir des formules.

**18.** Procédé de commande d'un dispositif d'injection de carburant comprenant :

la fourniture d'un injecteur (3) ;

la fourniture d'une électrovanne (34) pour commander une quantité d'injection de l'injecteur (3) ;

**caractérisé par**

la division d'un temps de retard de début d'injection (Tds) de l'injecteur (3) en une première période (Tds1), une deuxième période (Tds2), et une troisième période (Tds3), où :

la première période (Tds1) est définie comme débutant au moment où un courant électrique commence à passer dans l'électrovanne (34) et se terminant au moment où l'électrovanne (34) commence à se déplacer vers une position ouverte ;

la deuxième période (Tds2) est définie comme débutant au moment où l'électrovanne (34) commence à se déplacer vers la position ouverte et se terminant au moment où l'électrovanne (34) atteint une position complètement ouverte ; et

la troisième période (Tds3) est définie comme débutant au moment où l'électrovanne (34) a atteint la position complètement ouverte et se terminant au moment où une pression (Pcc) dans la chambre de commande (33) de l'injecteur (3) diminue pour atteindre une pression d'ouverture de la vanne (Popn) ;

le calcul des première, deuxième et troisième périodes (Tds1, Tds2 et Tds3) en fonction de formules prédéterminées simples ; et

la détermination du temps de retard de début d'injection Tds, qui est défini comme débutant au moment où une instruction d'ouverture de la vanne est transmise à l'injecteur (3) et se terminant au moment où l'injecteur (3) commence réellement à injecter le carburant, en additionnant les première, deuxième et troisième périodes (Tds1, Tds2 et Tds3) précédemment calculées.

# FIG. 1

INJECTION PULSE

INJECTION PULSE

2WV LIFT

Tds1

Tds2

2WV VALVE-CLOSING PD.

COMMON RAIL P (Pc)

CONTROL CHAMBER P

Tds3

VALVE-CLOSING PD.

BALANCING P

VALVE-OPENING P Popn

MAX LIFT

NEEDLE LIFT

Tds

SEC.ASCENDING SPEED

CONSTANT ASCENDING SPEED

DESCENDING SPEED

INIT.ASCENDING SPEED

INIT. ASCEND

SEC. ASCEND

INIT. ASCENDING PD.

SEC. ASCENDING PD.

CONSTANT-SPEED ASCENDING PD.

DESCENDING PD.

INJECTION RATE

EP 1 544 446 B1

# FIG. 2

VALVE LIFT: L2wv

FACE DIA.:Dzg

47a

P:Pm

FLOW-OUT Qdout

FLOW-IN Qdin

P:Pcc VOL.:Vcc

33

SECT. AREA: Scc

PccXScc

COMMON RAIL P: Pc

SET LOAD Nsp

P-RECEIVING AREA: Sns

SECT. AREA: Snz

PcXSns

SECT. AREA: Sse

SEAT DIA.: Dns

55

CYLINDER P: Pcyl

# FIG. 3

# FIG. 4

EP 1 544 446 B1

## FIG. 5

29

EP 1 544 446 B1

# FIG. 6

30

# FIG. 7

SHORT INJECTION PULSE PD.

INJECTION PULSE — Tqf

2WV LIFT

CONTROL CHAMBER P — VALVE-OPENING P, VALVE-CLOSING P, a2, a3

NEEDLE LIFT

INJECTION RATE — Qup, Tqr, Qdn, Tds, a1, Tde1, Tde2

TIME

# FIG. 8

LONG INJECTION PULSE PD.

INJECTION PULSE — Tqf

2WV LIFT

CONTROL CHAMBER P — VALVE-OPENING P, VALVE-CLOSING P, a2, a3

NEEDLE LIFT

INJECTION RATE — Qmax, Qup, Tqr, Qdn, Tds, a1, Tde1, Tde2

TIME

# FIG. 9 PRIOR ART

INJECTION
PULSE

REAL
INJECTION

DRIVE
PULSE

$T_q$

$T_{de1}$    $T_{de2}$

(3)

$\beta$  (2)

$Q_{up}$

$\alpha$

$Q_{ddwn}$

$Q_{max}$

INJECTION
RATE (LIFT)

$T_{ds}$

$T_{de}$

(1)

$T_{qr}$

EP 1 544 446 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10266888 A